# EUROPÄISCHE PATENTSCHRIFT

(11) **EP 3 720 587 B1**
(45) Veröffentlichungstag und Bekanntmachung des Hinweises auf die Patenterteilung: **09.08.2023**
(21) Anmeldenummer: 18814569.2
(22) Anmeldetag: 03.12.2018
(51) Int. Cl.: B01D 45/12, B01D 46/00, B01D 50/00, B05B 15/40

(54) **ABSCHEIDEMODUL UND VERFAHREN ZUR HERSTELLUNG EINES ABSCHEIDEMODULS**
FILTER MODULE AND METHOD OF FABRICATING SAME
MODULE FILTRANT ET METHODE DE SA FABRICATION

(30) Priorität: 04.12.2017 DE 102017221851
(43) Veröffentlichungstag der Anmeldung: 14.10.2020
(73) Patentinhaber: Dürr Systems AG, 74321 Bietigheim-Bissingen (DE)
(72) Erfinder: WESCHKE, Jürgen, 71263 Weil der Stadt (DE); DIETER, Heiko, 74354 Besigheim (DE); WIELAND, Dietmar, 71336 Waiblingen (DE); FREY, Hans-Ulrich, 70734 Fellbach (DE); SEYBOTH, Oliver, 71282 Hemmingen (DE); FOMBONNE, Antoine, 73760 Ostfildern (DE)
(74) Vertreter: DTS Patent- und Rechtsanwälte Schnekenbühl und Partner mbB
(86) Internationale Anmeldenummer: PCT/EP2018/083381
(87) Internationale Veröffentlichungsnummer: WO 2019/110528

(56) Entgegenhaltungen:
- EP-A1- 1 671 571
- WO-A1-2015/141169
- DE-B3-102016 008 255
- US-A- 2 281 610
- US-A- 4 375 365
- US-A- 4 460 391
- US-A1- 2016 023 231

## Beschreibung

Die vorliegende Erfindung betrifft ein Abscheidemodul sowie ein Verfahren zur Herstellung eines Abscheidemoduls. Abscheidemodule finden beispielsweise in der Automobilindustrie beim Lackieren von Fahrzeugkarosserien Anwendung. Insbesondere können solche Abscheidemodule zur Reinigung von mit Lack-Overspray beladener Luft verwendet werden.

Abscheidemodule können beispielsweise Filterelemente, insbesondere Taschenfilter, umfassen.

Die DE 10 2011 050 915 A1 und die DE 10 2015 112 113A1 offenbaren Papiergelegefiltermodule.

Die EP 1 492 609 B1 offenbart ein Filtermodul in Form eines durchströmbaren Hohlkörpers.

Technische Details von Zyklonabscheidern sind beispielsweise der folgenden Veröffentlichung zu entnehmen: "Die Berechnung von Zyklonabscheidern für Gase", Chemie Ingenieur Technik; 1972, Volume 44, 1-2, Page 63-71; Wiley-VCH Verlag, ISSN: 1522-2640.

Die US 2016/0023231 A1 offenbart eine Filtervorrichtung mit einem Zyklonabscheider.

Die US 2 281 610 A und die EP 1 671 571 A1 offenbaren Staubabscheider, bei welchen jeweils eine einzige Abscheideebene, ein darunterliegender Staubsammelbereich und eine darüberliegende Luftabführung vorgesehen sind.

Der vorliegenden Erfindung liegt die Aufgabe zugrunde, ein Abscheidemodul für eine Abscheidevorrichtung bereitzustellen, welches einfach und kostengünstig herstellbar ist und eine hohe Abscheideeffizienz aufweist.

Diese Aufgabe wird erfindungsgemäß durch ein Abscheidemodul gemäß Anspruch 1 gelöst.

Dadurch dass das Abscheidemodul mehrere in einem Innenraum eines Gehäuses angeordnete Zyklonabscheideelemente umfasst, kann das Abscheidemodul vorzugsweise einfach und kostengünstig hergestellt werden. Zudem ist mittels der Zyklonabscheideelemente vorzugsweise eine hohe Abscheideeffizienz erzielbar.

Die Zyklonabscheideelemente sind vorzugsweise parallel zueinander mit dem Gasstrom durchströmbar. Hierdurch kann vorzugsweise ein geringer Druckverlust gewährleistet werden.

Günstig kann es sein, wenn das Gehäuse und/oder die Zyklonabscheideelemente, insbesondere das gesamte Abscheidemodul, Faserformteile umfassen oder aus Faserformteilen gebildet sind.

Insbesondere sind unter dem Begriff "Faserformteile" Bauteile zu verstehen, welche aus einem fasrigen Material hergestellt sind oder im fertiggestellten Zustand miteinander verbundene Fasern aufweisen.

Faserformteile sind beispielsweise geformte Papierbauteile, Kartonbauteile, etc.

Insbesondere kann vorgesehen sein, dass ein Zyklonkörper, ein Zyklondeckel und/oder ein Tauchrohr eines jeden Zyklonabscheideelements aus einem Faserformteil gebildet ist.

Alternativ oder ergänzend hierzu kann vorgesehen sein, dass einzelne oder mehrere Bestandteile des Abscheidemoduls, beispielsweise das Gehäuse und/oder die Zyklonabscheideelemente, durch Tiefziehbauteile oder Spritzgussbauteile gebildet sind oder solche Tiefziehbauteile oder Spritzgussbauteile umfassen.

Mehrere Bauteile des Gehäuses und/oder der Zyklonabscheideelemente sind vorzugsweise mittels Steckverbindungen miteinander verbindbar.

Günstig kann es sein, wenn die Zyklonabscheideelemente jeweils einen Zyklonkörper umfassen, welcher einen Zyklonabscheideraum umgibt.

Sowohl eine dem Zyklonabscheideraum zugewandte Innenseite des Zyklonkörpers als auch eine dem Zyklonabscheideraum abgewandte Außenseite des Zyklonkörpers bilden Abscheideflächen zum Abscheiden von Verunreinigungen aus dem Rohgasstrom.

Der Zyklonkörper ist im Benutzungszustand des Abscheidemoduls insbesondere von Rohgas umströmbar oder umströmt.

Die Außenseite des Zyklonkörpers bildet somit insbesondere einen Prallabscheider zum Abscheiden von Verunreinigungen aus dem Rohgasstrom.

Der Zyklonkörper ist vorzugsweise zylindermantelförmig oder kegelstumpfmantelförmig oder kegelmantelförmig. Insbesondere ist hierbei vorzugsweise eine kreisrunde Grundfläche oder eine polygonale Grundfläche, beispielsweise eine sechseckige oder achteckige Grundfläche mit identischen Seitenlängen, vorgesehen.

Erfindungsgemäß ist vorgesehen, dass die Zyklonabscheideelemente jeweils einen Zyklonkörper umfassen, wobei die Zyklonkörper in einem Einströmabschnitt des Innenraums angeordnet sind. In diesem Einströmabschnitt bilden die Zyklonkörper Prallabscheideelemente zum Abscheiden von Verunreinigungen aus dem Rohgasstrom.

Jeder Zyklonkörper kann beispielsweise einen Einlassteil, in welchem eine oder mehrere Einlassöffnungen angeordnet sind, und einen Umkehrteil umfassen, innerhalb dessen eine zunächst radial außenliegend nach unten geführte Gasströmung umgekehrt und dann radial innenliegend nach oben einem Tauchrohr des Zyklonabscheideelements zugeführt wird.

Der Einlassteil und der Umkehrteil sind vorzugsweise jeweils als Hohlkegel oder kegelmantelförmig ausgebildet, wobei der Umkehrteil vorzugsweise längs einer Zentralachse oder Symmetrieachse des Zyklonkörpers stärker verjüngend ausgebildet ist als der Einlassteil.

Das Tauchrohr und der Einlassteil weisen vorzugsweise zumindest näherungsweise parallel zueinander verlaufende Mantelflächen auf.

Vorzugsweise weisen das Tauchrohr und der Einlassteil zumindest näherungsweise identische Konuswinkel auf.

Ein oder mehrere Einströmabschnitte des Innenraums des Gehäuses einerseits und ein oder mehrere Ausströmabschnitte des Innenraums des Gehäuses sind vorzugsweise über die Zyklonabscheideelemente fluidwirksam miteinander verbunden.

Ein in den Innenraum einströmender Rohgasstrom strömt somit insbesondere in den einen oder die mehreren Einströmabschnitte hinein, anschließend durch die Zyklonabscheideelemente hindurch und schließlich über den einen oder die mehreren Ausströmabschnitte aus dem Innenraum heraus.

Der Innenraum ist insbesondere in mehrere beispielsweise übereinander angeordnete Ebenen eingeteilt, wobei die Ebenen insbesondere voneinander verschiedene Abschnitte, insbesondere Einströmabschnitte und Ausströmabschnitte, bilden.

Die Zyklonkörper sind vorzugsweise in einem oder mehreren Einströmabschnitten des Innenraums verteilt angeordnet und bilden insbesondere Strömungsumlenkungen und/oder einen labyrinthartigen Strömungsweg in dem einen oder den mehreren Einströmabschnitten.

Die Zyklonabscheideelemente umfassen jeweils eine oder mehrere Einlassöffnungen zur Einleitung des Rohgasstroms in die Zyklonabscheideelemente, wobei jede Einlassöffnung eine Umgebung des jeweiligen Zyklonabscheideelements fluidwirksam mit einem innerhalb des jeweiligen Zyklonabscheideelements gebildeten Zyklonabscheideraum verbindet.

Die Umgebung des jeweiligen Zyklonabscheideelements ist insbesondere ein Raum, welcher das Zyklonabscheideelement umgibt. Insbesondere ist dies ein Einströmabschnitt des Innenraums des Gehäuses.

Die Zuführung des Rohgasstroms zu den Zyklonabscheideelementen erfolgt insbesondere leitungsfrei und/oder durch freie Ansaugung.

Zwei oder mehr Einlassöffnungen sind vorzugsweise durch zumindest näherungsweise tangential in einen Zyklonabscheideraum des jeweiligen Zyklonabscheideelements hinein gerichtete Einlasskanäle gebildet.

Die Einlasskanäle sind insbesondere im Wesentlichen rohrförmige Einlassstutzen, welche an einem Ende in den Zyklonabscheideraum münden, beispielsweise tangential, und welche an dem gegenüberliegenden weiteren Ende insbesondere im Wesentlichen frei in einen Einströmabschnitt hineinragen und/oder in einen Einströmabschnitt münden.

Ein oder mehrere Einlasskanäle weisen vorzugsweise einen länglichen Querschnitt auf, bei welchem insbesondere eine bezüglich einer Schwerkraftrichtung genommene Höhe mindestens ungefähr das Doppelte einer senkrecht hierzu genommenen Breite beträgt.

Alternativ hierzu können auch Einlasskanäle mit quadratischem oder rundem Querschnitt vorgesehen sein.

Das Abscheidemodul umfasst mehrere Abscheideebenen, welche jeweils mehrere in einer Ebene benachbart zueinander angeordnete Zyklonabscheideelemente umfassen.

Insbesondere umfasst jede Abscheideebene einen Einströmabschnitt, mehrere Zyklonabscheideelemente und einen Ausströmabschnitt.

Die Abscheideebenen sind insbesondere im Wesentlichen parallel zueinander angeordnet.

Insbesondere sind die Abscheideebenen parallel zu Trennwänden zwischen einem Einströmabschnitt und einem Ausströmabschnitt des Innenraums des Gehäuses.

Die Abscheideebenen sind vorzugsweise zumindest näherungsweise senkrecht zu Zentralachsen der Zyklonabscheideelemente, insbesondere Symmetrieachsen der Zyklonkörper der Zyklonabscheideelemente.

Jede Abscheideebene umfasst vorzugsweise mehrere in einem vorgegebenen Muster angeordnete Zyklonabscheideelemente. Beispielsweise kann eine gestaffelte Anordnung der Zyklonabscheideelemente vorgesehen sein, wobei beispielsweise mehrere längs einer Einströmrichtung hintereinander angeordnete Reihen von Zyklonabscheideelementen vorgesehen sind.

Eine erste Reihe umfasst beispielsweise ein oder zwei Zyklonabscheideelemente. Eine weitere Reihe umfasst beispielsweise zwei oder drei Zyklonabscheideelemente. Beispielsweise eine optionale dritte Reihe umfasst drei oder vier Zyklonabscheideelemente.

Ferner kann vorgesehen sein, dass die Zyklonabscheideelemente in einem regelmäßigen Muster und/oder gleichmäßig verteilt angeordnet sind.

Insbesondere können eine oder mehrere Abscheideebenen vorgesehen sein, welche jeweils mehrere in einem quadratischen Muster angeordnete Zyklonabscheideelemente umfassen.

Günstig kann es sein, wenn eine oder mehrere Abscheideebenen des Abscheidemoduls mehrere Reihen aus Zyklonabscheideelementen umfasst, wobei die Reihen sich quer, insbesondere zumindest näherungsweise senkrecht, zu einer Einströmrichtung erstrecken, in welcher der zu reinigende Rohgasstrom in den Innenraum des Gehäuses einströmt.

Günstig kann es sein, wenn eine oder mehrere Abscheideebenen des Abscheidemoduls mehrere Zeilen aus Zyklonabscheideelementen umfasst, wobei die Zeilen sich längs, insbesondere zumindest näherungsweise parallel zu, einer Einströmrichtung erstrecken, in welcher der zu reinigende Rohgasstrom in den Innenraum des Gehäuses einströmt. Die Zyklonabscheideelemente einer jeden Zeile sind vorzugsweise längs, insbesondere zumindest näherungsweise parallel zu, der Einströmrichtung aufeinanderfolgend angeordnet.

Günstig kann es sein, wenn mehrere Reihen, insbesondere sämtliche Reihen, aus Zyklonabscheideelementen einer oder mehrerer Abscheideebenen eines Abscheidemoduls gleich viele Zyklonabscheideelemente aufweisen.

Günstig kann es sein, wenn mehrere Zeilen, insbesondere sämtliche Zeilen, aus Zyklonabscheideelementen einer oder mehrerer Abscheideebenen eines Abscheidemoduls gleich viele Zyklonabscheideelemente aufweisen.

Zwischen jeweils zwei Zeilen aus Zyklonabscheideelementen und/oder zwischen jeweils zwei Reihen aus Zyklonabscheideelementen ist insbesondere ein Strömungskanal gebildet.

Es kann vorgesehen sein, dass die Zyklonabscheideelemente einer jeden Zeile aus Zyklonabscheideelementen ausschließlich einem einzigen Strömungskanal zugeordnete und/oder zugewandte Einlassöffnungen aufweisen.

Alternativ oder ergänzend hierzu kann vorgesehen sein, dass die Zyklonabscheideelemente mindestens einer Zeile aus Zyklonabscheideelementen zwei Strömungskanälen zugeordnete und/oder zugewandte Einlassöffnungen aufweisen.

Günstig kann es sein, wenn sämtlichen Strömungskanälen einer oder mehrerer Abscheideebenen des Abscheidemoduls gleich viele oder höchstens um die Anzahl von Eins variierende Einlassöffnungen von Zyklonabscheideelementen zugeordnet oder zugewandt angeordnet sind.

Bei einer Ausgestaltung der Erfindung kann vorgesehen sein, dass längs der Einströmrichtung aufeinanderfolgend angeordnete Reihen aus Zyklonabscheideelementen Zyklonabscheideelemente mit variierender Ausgestaltung, insbesondere Höhe, Breite und/oder Form, aufweisen.

Insbesondere kann vorgesehen sein, dass längs der Einströmrichtung aufeinanderfolgend angeordnete Zyklonabscheideelemente unterschiedlich hohe und/oder unterschiedlich lange Zyklonkörper und/oder Einlasskanäle und/oder Tauchrohre aufweisen. Insbesondere kann vorgesehen sein, dass eine Länge und/oder Höhe der Zyklonkörper und/oder der Einlasskanäle und/oder der Tauchrohre der längs der Einströmrichtung aufeinanderfolgenden Zyklonabscheideelemente längs der Einströmrichtung zunimmt oder abnimmt.

Ferner kann vorgesehen sein, dass quer, insbesondere zumindest näherungsweise senkrecht, zur Einströmrichtung aufeinanderfolgend angeordnete Zyklonabscheideelement identisch miteinander ausgebildet sind, insbesondere hinsichtlich ihrer Höhe, Breite und/oder Form.

Vorteilhaft kann es sein, wenn Einlassöffnungen mehrerer, insbesondere sämtlicher, Zyklonabscheideelemente, welche längs der Einströmrichtung aufeinanderfolgend angeordnet sind, in direkter Linie längs der Einströmrichtung aufeinanderfolgend angeordnet sind.

Ferner kann es vorteilhaft sein, wenn Einlassöffnungen mehrerer, insbesondere sämtlicher, Zyklonabscheideelemente, welche längs der Einströmrichtung aufeinanderfolgend angeordnet sind, in einer Richtung senkrecht zur Einströmrichtung versetzt zueinander angeordnet sind.

Beispielsweise kann eine Anordnung der Einlassöffnungen derart vorgesehen sein, dass diese längs der Einströmrichtung alternierend auf einander gegenüberliegenden Seiten des jeweiligen Zyklonabscheideelements angeordnet sind.

Alternativ oder ergänzend hierzu kann vorgesehen sein, dass die Einlassöffnungen mehrerer, insbesondere sämtlicher, Zyklonabscheideelemente, welche längs der Einströmrichtung aufeinanderfolgend angeordnet sind, a) in einer parallel zu Zentralachsen der Zyklonabscheideelemente verlaufenden Richtung und/oder b) in einer senkrecht zu Zentralachsen der Zyklonabscheideelemente und/oder senkrecht zur Einströmrichtung verlaufenden Richtung versetzt zueinander angeordnet sind.

Insbesondere ragen die Einlassöffnungen mehrerer, insbesondere sämtlicher, Zyklonabscheideelemente, welche längs der Einströmrichtung aufeinanderfolgend angeordnet sind, aus einem Strömungsschatten von längs der Einströmrichtung davor angeordneten Zyklonabscheideelementen hervor.

Beispielsweise ragen die Einlassöffnungen mehrerer, insbesondere sämtlicher, Zyklonabscheideelemente, welche längs der Einströmrichtung aufeinanderfolgend angeordnet sind, nach oben und/oder nach unten und/oder seitlich über längs der Einströmrichtung davor angeordnete Zyklonabscheideelemente hervor.

Die Einlassöffnungen der Zyklonabscheideelemente sind vorzugsweise zumindest näherungsweise identisch dimensioniert. Insbesondere weisen die Einlassöffnungen vorzugsweise alle denselben Strömungsquerschnitt auf.

Es können jedoch auch Zyklonabscheideelemente mit voneinander verschieden dimensionierten Einlassöffnungen, insbesondere mit unterschiedlichen Strömungsquerschnitten, vorgesehen sein.

Bei einer Ausgestaltung der Erfindung kann eine Höhenstaffelung der längs der Einströmrichtung aufeinanderfolgend angeordneten Zyklonabscheideelemente vorgesehen sein.

Vorzugsweise sind eine oder mehrere Zeilen von Zyklonabscheideelementen mit längs der Einströmrichtung zunehmender Größe und/oder Höhe des jeweiligen Zyklonkörpers, insbesondere des Einlassteils und/oder Umkehrteils des jeweiligen Zyklonkörpers, und/oder der jeweiligen Einlassöffnung und/oder des jeweiligen Tauchrohrs vorgesehen.

Alternativ oder ergänzend hierzu kann vorgesehen sein, dass eine oder mehrere Zeilen von Zyklonabscheideelementen mit längs der Einströmrichtung abnehmender Größe und/oder Höhe des jeweiligen Zyklonkörpers, insbesondere des Einlassteils und/oder Umkehrteils des jeweiligen Zyklonkörpers, und/oder der jeweiligen Einlassöffnung und/oder des jeweiligen Tauchrohrs vorgesehen sind.

Vorzugsweise sind sämtliche Zentralachsen sämtlicher Zyklonabscheideelemente, insbesondere sämtliche Symmetrieachsen sämtlicher Zyklonkörper, zumindest näherungsweise parallel zueinander ausgerichtet.

Unter der Formulierung "zumindest näherungsweise" ist vorzugsweise eine Abweichung von höchstens ungefähr 20%, beispielsweise höchstens ungefähr 10%, vorzugsweise höchstens ungefähr 5%, von dem jeweils angegebenen Wert zu verstehen. "Senkrecht" bedeutet dabei beispielsweise eine Ausrichtung in einem Winkel von 90°. "Parallel" bedeutet beispielsweise eine Ausrichtung in einem Winkel von 180°.

Das Abscheidemodul umfasst vorzugsweise mehrere Einströmabschnitte und mehrere Ausströmabschnitte, welche insbesondere alternierend angeordnet sind.

Insbesondere ist der Innenraum des Gehäuses des Abscheidemoduls durch mehrere alternierend angeordnete Einströmabschnitte und Ausströmabschnitte gebildet.

Günstig kann es sein, wenn zwischen zwei Einströmabschnitten ein Ausströmabschnitt angeordnet ist. Ferner kann zwischen zwei Ausströmabschnitten ein Einströmabschnitt angeordnet sein.

Jedem Einströmabschnitt ist vorzugsweise ein Ausströmabschnitt zugeordnet.

Es kann ferner vorgesehen sein, dass einem Einströmabschnitt zwei Ausströmabschnitte zugeordnet sind oder dass zwei Einströmabschnitte einem Ausströmabschnitt zugeordnet sind.

Die Einströmabschnitte und die Ausströmabschnitte sind insbesondere durch zumindest näherungsweise senkrecht zu Zentralachsen der Zyklonabscheideelemente, insbesondere zu den Symmetrieachsen der Zyklonkörper, verlaufende Trennwände voneinander getrennt.

Das Gehäuse weist vorzugsweise eine Einströmseite und eine Ausströmseite auf. Die Einströmseite und die Ausströmseite sind vorzugsweise einander gegenüberliegend angeordnete Seitenwände des Gehäuses.

Vorzugsweise münden sämtliche Einströmabschnitte in einer gemeinsamen Einströmseite.

Sämtliche Ausströmabschnitte münden vorzugsweise in einer gemeinsamen Ausströmseite.

Vorteilhaft kann es sein, wenn Zyklonkörper der Zyklonabscheideelemente Stützelemente zum Abstützen einer oder mehrerer Trennwände sind.

Die Trennwände unterteilen den Innenraum des Gehäuses vorzugsweise in mehrere Abschnitte, insbesondere in einen oder mehrere Einströmabschnitte und/oder einen oder mehrere Ausströmabschnitte.

Günstig kann es sein, wenn die Trennwände Bestandteil des Gehäuses oder mit dem Gehäuse verbunden sind.

Mittels der Stützelemente sind die Trennwände insbesondere in von Seitenwänden des Gehäuses beabstandeten Bereichen mechanisch abgestützt.

Insbesondere ist eine bezüglich der Schwerkraftrichtung untere Trennwand mittels eines oder mehrerer Stützelemente an einer Bodenwandung des Gehäuses abgestützt. Oberhalb dieser Trennwand angeordnete weitere Trennwände sind vorzugsweise mittels eines oder mehrerer weiterer Stützelemente direkt oder indirekt auf dieser unteren Trennwand und/oder aufeinander abgestützt.

Stützelemente sind insbesondere Abstandshalter, mittels welchen die Trennwände in einem vorgegebenen Abstand relativ zueinander gehalten werden.

Die Zyklonabscheideelemente umfassen vorzugsweise jeweils einen Zyklonkörper, einen Zyklondeckel und/oder ein Tauchrohr. Mehrere Zyklonkörper, mehrere Zyklondeckel und/oder mehrere Tauchrohre sind vorzugsweise aufeinander stapelbar. Hierdurch ist insbesondere ein platzsparender Transport des Abscheidemoduls oder zumindest von Bauteilen des Abscheidemoduls möglich.

Mehrere Trennwände eines oder mehrerer Abscheidemodule sind vorzugsweise aufeinander stapelbar.

Die Zyklonabscheideelemente umfassen vorzugsweise jeweils ein zumindest näherungsweise trichterförmiges Tauchrohr, welches in einen Zyklonkörper des jeweiligen Zyklonabscheideelements hineinragt.

Das Tauchrohr ist insbesondere an einem Zyklondeckel des jeweiligen Zyklonabscheideelements und/oder an einer Trennwand festgelegt.

Das Abscheidemodul umfasst vorzugsweise eine Prallabscheidestufe, eine Zyklonabscheidestufe und/oder einen Nachabscheidestufe.

Die Prallabscheidestufe ist insbesondere durch die Zyklonkörper der Zyklonabscheideelemente gebildet, wobei insbesondere an einer Außenseite der Zyklonkörper Verunreinigungen abgeschieden werden.

Die Zyklonabscheidestufe ist insbesondere durch die Zyklonabscheideelemente gebildet, wobei Verunreinigungen innerhalb der Zyklonkörper abgeschieden werden.

Eine Nachabscheidestufe ist beispielsweise durch ein oder mehrere Filterelemente, beispielsweise eine oder mehrere Filtermatten, gebildet.

Insbesondere ist eine Nachabscheidestufe durch eine sogenannte Paintstopmatte gebildet.

Die Nachabscheidestufe ist insbesondere durch eine an einer Ausströmseite des Abscheidemoduls, insbesondere des Gehäuses des Abscheidemoduls, angeordnete Filtermatte gebildet.

Das Abscheidemodul eignet sich insbesondere zur Verwendung in einer Abscheidevorrichtung zum Abscheiden von Verunreinigungen aus einem Rohgasstrom.

Die vorliegende Erfindung betrifft daher auch eine Abscheidevorrichtung zum Abscheiden von Verunreinigungen aus einem Rohgasstrom.

Die erfindungsgemäße Abscheidevorrichtung umfasst mehrere Abscheidemodule, sowie mehrere Modulaufnahmen zur Aufnahme der Abscheidemodule.

Die Abscheidemodule sind insbesondere lösbar und/oder auswechselbar in den Modulaufnahmen festgelegt oder festlegbar.

Mittels einer Rohgaszuführung der Abscheidevorrichtung ist insbesondere ein zu reinigender Rohgasstrom zu den in den Modulaufnahmen angeordneten Abscheidemodulen zuführbar. Mittels einer Reingasabführung ist vorzugsweise ein durch Reinigung des Rohgasstroms mittels der Abscheidemodule erhältlicher Reingasstrom von den in den Modulaufnahmen angeordneten Abscheidemodulen abführbar.

Die vorliegende Erfindung betrifft ferner ein Verfahren zur Herstellung eines Abscheidemoduls.

Der vorliegenden Erfindung liegt diesbezüglich die Aufgabe zugrunde, ein Verfahren bereitzustellen, mittels welchem ein Abscheidemodul mit hoher Abscheideeffizienz einfach und kostengünstig herstellbar ist.

Diese Aufgabe wird erfindungsgemäß durch ein Verfahren zur Herstellung eines erfindungsgemäßen Abscheidemoduls gelöst, wobei das Verfahren Folgendes umfasst:
Bereitstellen von Formteilen von Zyklonabscheideelementen;
Montieren und Festlegen derselben in einem Gehäuse.

Das erfindungsgemäße Verfahren weist vorzugsweise einzelne oder mehrere der im Zusammenhang mit dem erfindungsgemäßen Abscheidemodul und/oder der erfindungsgemäßen Abscheidevorrichtung beschriebenen Merkmale und/oder Vorteile auf.

Die Formteile der Zyklonabscheideelemente sind insbesondere Zyklonkörper, Zyklondeckel und/oder Tauchrohre.

Die Formteile sind insbesondere kraftschlüssig und/oder formschlüssig zusammensteckbar.

Günstig kann es sein, wenn die Formteile Faserformteile sind.

Die Formteile sind insbesondere durch Nassformen, Pressen und anschließendes Trocken hergestellt oder herstellbar.

Ferner kann eine Herstellung der Formteile durch Spritzgießen oder Tiefziehen vorgesehen sein.

Vorteilhaft kann es sein, wenn hierzu ein Gemisch aus flüssigem Transportmedium, Bindemittel und/oder Fasern, insbesondere Naturfasern, bereitgestellt wird, wobei in einem Nassformschritt und einem Pressschritt das flüssige Transportmedium und/oder überschüssiges Bindemittel größtenteils entfernt wird und die verbleibenden Fasern in eine gewünschte Form gebracht werden.

Durch anschließendes Trocknen wird insbesondere das übrige Transportmedium aus den Formteilen entfernt und/oder das Bindemittel getrocknet und/oder ausgehärtet.

Insbesondere kann eine sogenannte Slurry als Ausgangsstoff für die Herstellung von Faserformteilen vorgesehen sein. Beispielsweise durch Schöpfen und/oder Pressen kann ein weiterverarbeitbares Basismaterial, insbesondere Fasern mit geringerem Anteil von flüssigem Transportmedium und/oder Bindemittel, bereitgestellt werden.

Ein oder mehrere Bauteile, insbesondere sämtliche Bauteile, des Abscheidemoduls sind vorzugsweise behandelt, insbesondere nach deren Formgebung nachbehandelt, beispielsweise durch Imprägnieren und/oder Beschichten. Hierdurch kann vorzugsweise eine Feuchte- und/oder Lösemittelbeständigkeit des Abscheidemoduls erhöht werden, um letztlich insbesondere die Formstabilität in einem beladenen Zustand zu erhöhen.

Alternativ oder ergänzend hierzu kann vorgesehen sein, dass ein oder mehrere Bauteile, insbesondere sämtliche Bauteile, des Abscheidemoduls aus einem Material gebildet sind, welches ein oder mehrere Zuschlagstoffe zur Erhöhung der Feuchte- und/oder Lösemittelbeständigkeit umfasst.

Die Bauteile sind insbesondere Formteile.

Ferner können das erfindungsgemäße Abscheidemodul, die erfindungsgemäße Abscheidevorrichtung und/oder das erfindungsgemäße Herstellungsverfahren einzelne oder mehrere der nachfolgend beschriebenen Merkmale und/oder Vorteile aufweisen:
Günstig kann es sein, wenn das Abscheidemodul mehrere, insbesondere identisch ausgebildete, Abscheideebenen, beispielsweise zwei, drei, vier oder mehr Abscheideebenen, umfasst.

Jede Abscheideebene umfasst vorzugsweise mehrere Zyklonabscheideelemente, insbesondere mindestens drei Zyklonabscheideelemente, mindestens sieben Zyklonabscheideelemente oder mindestens zehn Zyklonabscheideelemente.

Das Gehäuse des Abscheidemoduls ist vorzugsweise quaderförmig, insbesondere würfelförmig mit identischen Kantenlängen.

Beispielsweise kann eine Kantenlänge von ungefähr 500 mm vorgesehen sein.

Das Abscheidemodul umfasst vorzugsweise eine oder mehrere Auffangwannen und/oder Zwischenböden, insbesondere zur Aufnahme von abgeschiedenen Verunreinigungen.

Insbesondere sind Auffangwannen an einer Bodenwandung des Gehäuses und/oder an einer oder mehreren Trennwänden angeordnet und/oder ausgebildet.

Das Tauchrohr eines jeden Zyklonabscheideelements kann beispielsweise ein von einem Zyklondeckel verschiedenes Bauteil sein. Alternativ hierzu kann vorgesehen sein, dass das Tauchrohr in den jeweiligen Zyklondeckel integriert ist.

Ein oder mehrere Zyklondeckel und/oder ein oder mehrere Tauchrohre sind vorzugsweise in eine Bodenwand und/oder Deckenwand, insbesondere eine Trennwand und/oder einen Zwischenboden, integriert oder durch dieselbe gebildet.

Günstig kann es sein, wenn jede Abscheideebene eines Abscheidemoduls Folgendes umfasst oder hieraus gebildet ist:
a) mehrere durch einzelne Formteile oder durch ein einziges Formteil gebildete Zyklonkörper; und/oder
b) eine durch ein Formteil gebildete Trennwand, wobei die Trennwand insbesondere die Zyklonkörper abdeckt und/oder Tauchrohre aufnimmt oder bildet; und/oder
c) eine durch ein Formteil gebildete weitere Trennwand, wobei das Formteil vorzugsweise zudem ein oder mehrere Stützelemente bildet oder umfasst, mittels derer diese Trennwand von derjenigen Trennwand, welche die Zyklonkörper abdeckt und/oder Tauchrohre aufnimmt oder bildet, auf Abstand haltbar ist, insbesondere um dazwischen einen Ausströmabschnitt zu bilden.

Insbesondere kann eine Abscheideebene durch lediglich drei Formteile, insbesondere Faserformplatten, gebildet sein, wobei ein Formteil vorzugsweise die Zyklonkörper bildet, wobei ein weiteres Formteil vorzugsweise die Zyklondeckel und/oder die Tauchrohre bildet und wobei ein drittes Formteil vorzugsweise eine Deckenwandung zur Begrenzung eines Ausströmabschnitts und/oder einen Zwischenboden zur Auflage und Abstützung einer weiteren Abscheideebene bildet.

Günstig kann es sein, wenn die Formteile hinsichtlich ihrer Grundfläche und/oder hinsichtlich ihrer Ausmaße in beiden horizontalen Richtungen (im montierten Zustand) zumindest näherungsweise einer inneren Grundfläche und/oder einer horizontalen Innenquerschnittsfläche des Gehäuses entsprechen.

Insbesondere sind mehrere solcher Abscheideebenen übereinander stapelbar oder gestapelt.

Der Zyklondeckel ist vorzugsweise formschlüssig und/oder kraftschlüssig und/oder stoffschlüssig auf und/oder an einem oder mehreren, insbesondere sämtlichen, Zyklonkörpern festlegbar, insbesondere aufsteckbar.

Ein oder mehrere Stützelemente sind beispielsweise einstückig mit einem oder mehreren Zyklondeckeln ausgebildet. Insbesondere kann vorgesehen sein, dass die Stützelemente durch hohle Vorsprünge in dem einen oder den mehreren Zyklondeckeln gebildet sind.

Günstig kann es sein, wenn die Stützelemente Aufnahmeelemente zur Aufnahme von abgeschiedenen Verunreinigungen bilden. Insbesondere können vorzugsweise flüssige Verunreinigungen in die Stützelemente fließen, wodurch sich vorzugsweise ein größeres Aufnahmevolumen und/oder eine größere Aufnahmekapazität des Abscheidemoduls ergeben können.

Eine Einströmrichtung, in welcher der zu reinigende Rohgasstrom in den Innenraum des Gehäuses einströmt, ist vorzugsweise zumindest näherungsweise senkrecht zu einer Einströmrichtung, in welcher der Rohgasstrom in die Zyklonabscheideelemente einströmt. Hierdurch kann vorzugsweise eine Umlenkung sowie eine Vorabscheidung erzielt werden, wodurch sich eine reduzierte Abscheiderate in den Einlasskanälen der Zyklonabscheideelemente ergeben kann. Das Abscheidemodul kann hierdurch über einen langen Zeitraum hinweg mit geringerem Druckverlust zur Abscheidung von Verunreinigungen verwendet werden.

Es kann jedoch auch vorgesehen sein, dass eine Einströmrichtung, in welcher der zu reinigende Rohgasstrom in den Innenraum des Gehäuses einströmt, zumindest näherungsweise senkrecht zu einer Einströmrichtung ist, in welcher der Rohgasstrom in die Zyklonabscheideelemente einströmt. Insbesondere kann hierbei vorgesehen sein, dass eine Einlassöffnung eines oder mehrerer Zyklonabscheideelemente zur Einströmseite des Abscheidemoduls hin geöffnet ist.

Vorteilhaft kann es sein, wenn eine oder mehrere Einlassöffnungen, insbesondere sämtliche Einlassöffnungen, eines oder mehrerer Zyklonabscheideelemente, insbesondere sämtlicher Zyklonabscheideelemente, längs einer Einströmrichtung, in welcher der zu reinigende Rohgasstrom in den Innenraum des Gehäuses einströmt, abschnittsweise oder vollständig unverdeckt sind.

Unter der Bezeichnung "unverdeckt" ist in dieser Beschreibung und den beigefügten Ansprüchen insbesondere zu verstehen, dass in einer parallel zur Einströmrichtung verlaufenden Richtung zwischen der Einströmseite des Abscheidemoduls einerseits und der jeweiligen Einlassöffnung andererseits keine sichthindernden und/oder strömungshindernden und/oder strömungsbeeinflussenden Objekte angeordnet sind.

Vorteilhaft kann es sein, wenn ein Einströmabschnitt des Abscheidemoduls sich längs der Einströmrichtung, in welcher der zu reinigende Rohgasstrom in den Innenraum des Gehäuses einströmt, verjüngt oder erweitert.

Insbesondere kann vorgesehen sein, dass sich ein senkrecht zur Einströmrichtung genommener Querschnitt des Einströmabschnitts, insbesondere einschließlich der Zyklonabscheidekörper, längs der Einströmrichtung, in welcher der zu reinigende Rohgasstrom in den Innenraum des Gehäuses einströmt, verjüngt oder erweitert.

Alternativ oder ergänzend hierzu kann vorgesehen sein, dass ein Ausströmabschnitt des Abscheidemoduls sich längs einer Ausströmrichtung, in welcher ein durch Reinigung des Rohgasstroms erhaltener Reingasstrom aus dem Innenraum des Gehäuses ausströmt, verjüngt oder erweitert.

Insbesondere kann vorgesehen sein, dass sich ein senkrecht zur Ausströmrichtung genommener Querschnitt des Ausströmabschnitts, insbesondere einschließlich eventueller Stützelemente, längs der Ausströmrichtung, in welcher ein durch Reinigung des Rohgasstroms erhaltener Reingasstrom aus dem Innenraum des Gehäuses ausströmt, verjüngt oder erweitert.

Die Ausströmrichtung ist insbesondere zumindest näherungsweise parallel oder quer, insbesondere zumindest näherungsweise senkrecht, zur Einströmrichtung.

Eine Verjüngung oder Erweiterung kann beispielsweise kontinuierlich, insbesondere stetig, oder stufenförmig sein. Beispielsweise ist mit jeder Reihe aus Zyklonabscheideelementen längs der Einströmrichtung und/oder längs der Ausströmrichtung eine Verjüngungsstufe oder Erweiterungsstufe vorgesehen. Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung eines Abscheidemoduls;
- Fig. 2: einen schematischen vertikalen Längsschnitt durch das Abscheidemodul aus Fig. 1;
- Fig. 3: einen schematischen vertikalen Querschnitt durch das Abscheidemodul aus Fig. 1 längs der Linie 3-3 in Fig. 2;
- Fig. 4: einen der Fig. 2 entsprechenden schematischen vertikalen Längsschnitt durch eine alternative Ausführungsform eines Abscheidemoduls, bei welcher eine gemeinsame Einströmkammer und eine gemeinsame Ausströmkammer vorgesehen sind;
- Fig. 5: eine schematische perspektivische Darstellung von Bauteilen einer weiteren Ausführungsform eines Abscheidemoduls, bei welcher ein sich verjüngender Einströmabschnitt und ein sich erweiternder Ausströmabschnitt vorgesehen sind;
- Fig. 6: einen schematischen vertikalen Längsschnitt durch die in Fig. 5 dargestellten Bauteile des Abscheidemoduls;
- Fig. 7: eine schematische perspektivische Explosionsdarstellung der in Fig. 5 dargestellten Bauteile des Abscheidemoduls;
- Fig. 8: eine schematische Darstellung der Funktionsweise eines Abscheidemoduls, welches die in Fig. 5 dargestellten Bauteile aufweist;
- Fig. 9: eine der Fig. 8 entsprechende Darstellung einer weiteren Ausführungsform eines Abscheidemoduls, bei welcher Zyklonabscheideelemente mit identischen Umkehrteilen und mit unterschiedlich hohen Einlassteilen vorgesehen sind;
- Fig. 10: eine der Fig. 8 entsprechende Darstellung einer weiteren Ausführungsform eines Abscheidemoduls, bei welcher Zyklonabscheideelemente mit identischen Einlassteilen und mit unterschiedlich hohen Umkehrteilen vorgesehen sind;
- Fig. 11: einen horizontalen Querschnitt durch eine alternative Ausführungsform eines Abscheidemoduls, bei welcher 25 Zyklonabscheideelemente in einer Abscheideebene angeordnet sind;
- Fig. 12: eine der Fig. 11 entsprechende Darstellung einer weiteren alternativen Ausführungsform eines Abscheidemoduls, bei welcher zwei Strömungskanäle zwischen den Zyklonabscheideelementen gebildet sind und wobei Einlassöffnungen der Zyklonabscheideelemente derart angeordnet sind, dass einem der Strömungskanäle die doppelte Anzahl von Einlassöffnungen zugeordnet ist als dem anderen der Strömungskanäle;
- Fig. 13: eine der Fig. 11 entsprechende Darstellung einer weiteren Ausführungsform eines Abscheidemoduls, bei welcher zwei Strömungskanäle zwischen den Zyklonabscheideelementen gebildet sind und wobei Einlassöffnungen der Zyklonabscheideelemente derart angeordnet sind, dass den beiden Strömungskanälen zumindest näherungsweise dieselbe Anzahl von Einlassöffnungen zugeordnet ist;
- Fig. 14: eine erste Ausführungsform eines Zyklonabscheideelements, bei welcher ein Einlassstutzen vorgesehen ist; und
- Fig. 15: eine zweite Ausführungsform eines Zyklonabscheideelements, bei welcher anstelle eines Einlassstutzens eine Ausnehmung in einer Wandung eines Zyklonkörpers des Zyklonabscheideelements vorgesehen ist.

Gleiche oder funktional äquivalente Elemente sind in sämtlichen Figuren mit denselben Bezugszeichen versehen.

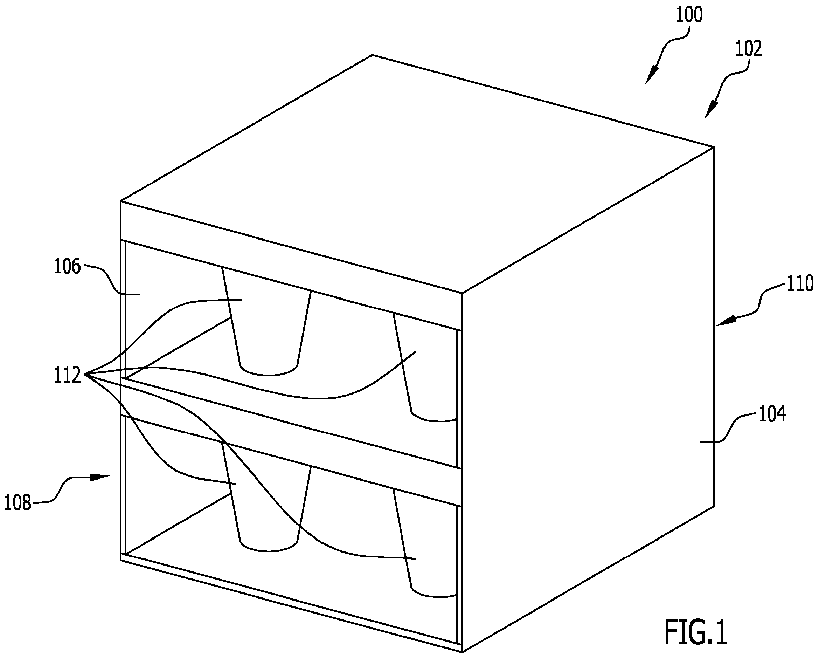

Eine in den Fig. 1 bis 3 dargestellte Ausführungsform eines als Ganzes mit 100 bezeichneten Abscheidemoduls kommt insbesondere als Bestandteil einer Abscheidevorrichtung 102 zum Einsatz.

Das Abscheidemodul 100 ist insbesondere eines von mehreren im Wesentlichen identisch ausgebildeten Abscheidemodulen 100, welche in komplementär hierzu ausgebildeten Modulaufnahmen der Abscheidevorrichtung 102 anordenbar sind. Die Abscheidemodule 100 sind dabei insbesondere auswechselbar an den Modulaufnahmen festgelegt.

Mittels der Abscheidemodule 100 ist insbesondere ein Gasstrom reinigbar. Insbesondere sind Verunreinigungen aus einem Rohgasstrom entfernbar.

Die Abscheidevorrichtung 102 ist insbesondere Bestandteil einer Lackieranlage und dient der Entfernung von Lack-Overspray aus einem durch eine Lackierkabine hindurchgeführten Gasstrom, insbesondere Luftstrom.

Ein Abscheidemodul 100 umfasst vorzugsweise ein Gehäuse 104, welches insbesondere im Wesentlichen quaderförmig ausgebildet ist und einen Innenraum 106 umgibt.

Das Gehäuse 104 weist eine Einströmseite 108 sowie eine Ausströmseite 110 auf.

Durch die Einströmseite 108 kann ein zu reinigender Gasstrom in den Innenraum 106 einströmen. An der Ausströmseite 110 kann der in dem Innenraum 106 gereinigte Gasstrom aus dem Innenraum 106 des Gehäuses 104 herausströmen.

In dem Innenraum 106 sind mehrere Zyklonabscheideelemente 112 des Abscheidemoduls 100 angeordnet.

Die Zyklonabscheideelemente 112 bilden einerseits eine Prallabscheidestufe 114 des Abscheidemoduls 100 und andererseits eine Zyklonabscheidestufe 116 des Abscheidemoduls 100.

Die Zyklonabscheideelemente 112 umfassen hierzu jeweils einen Zyklonkörper 118, welcher in einem Einströmabschnitt 120 des Innenraums 106 angeordnet ist und von dem zu reinigenden Rohgasstrom umströmt wird.

Die Zyklonkörper 118 bilden somit insbesondere Prallabscheideelemente 122.

Ferner weisen die Zyklonabscheideelemente 112 Einlassöffnungen 124, insbesondere Einlasskanäle 125, auf.

Die Einlasskanäle 125 verbinden insbesondere einen innerhalb der Zyklonkörper 118 angeordneten Zyklonabscheideraum 126 mit einer Umgebung 128 der Zyklonkörper 118. Die Umgebung 128 ist insbesondere der Einströmabschnitt 120 des Innenraums 106.

Die Einlasskanäle 125 sind insbesondere bezüglich einer Zentralachse 130, vorzugsweise bezüglich einer Symmetrieachse 132, der Zyklonkörper 118 symmetrisch zueinander angeordnet und/oder ausgebildet.

Insbesondere sind die Einlasskanäle 125 derart angeordnet, dass diese tangential in die Zyklonkörper 118 münden.

Die Einlasskanäle 125 sind insbesondere an einem bezüglich einer Schwerkraftrichtung g oberen Endbereich der Zyklonkörper 118 angeordnet und/oder ausgebildet.

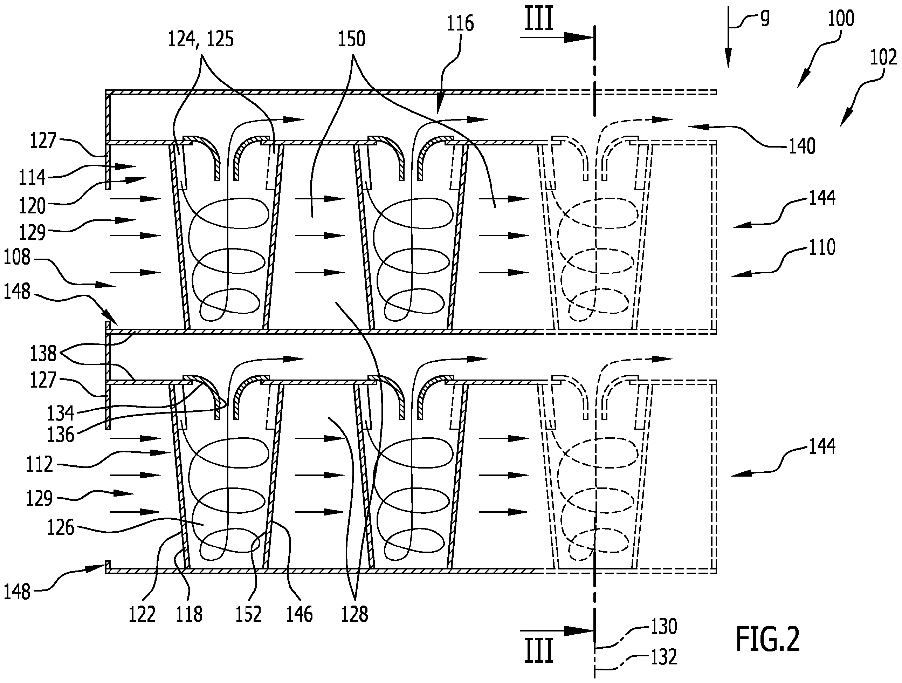

Insbesondere zum Schutz der Einlasskanäle 125 vor einer direkten Anströmung mit dem Rohgasstrom kann optional vorgesehen sein, dass in dem Einströmabschnitt 120 eine Blende 127 angeordnet ist (siehe Fig. 2).

Die Blende 127 ragt beispielsweise bezüglich der Schwerkraftrichtung g von oben in einen Strömungsweg des Rohgasstroms hinein. Insbesondere kann durch die Blende eine in der Einströmseite 108 ausgebildete Einströmöffnung 129 teilweise abgedeckt werden.

Die Zyklonkörper 118 sind beispielsweise zylindermantelförmig oder kegelmantelförmig oder kegelstumpfmantelförmig ausgebildet.

Insbesondere verjüngen sich die Zyklonkörper 118 längs der Schwerkraftrichtung g nach unten hin.

Ebenfalls an einem bezüglich der Schwerkraftrichtung g oberen Endbereich eines jeden Zyklonkörpers 118 ist ein den Zyklonabscheideraum 126 begrenzender Zyklondeckel 134 und/oder ein in den Zyklonabscheideraum 126 hineinragendes Tauchrohr 136 angeordnet.

Sowohl der Zyklondeckel 134 als auch das Tauchrohr 136 sind vorzugsweise bezüglich der Zentralachse 130 eines jeden Zyklonabscheideelements 112 symmetrisch, insbesondere rotationssymmetrisch, angeordnet und/oder ausgebildet.

Eine ebenfalls an dem oberen Endbereich der Zyklonkörper 118 angeordnete Trennwand 138 des Gehäuses 104 begrenzt den Einströmabschnitt 120 nach oben hin und trennt diesen von einem Ausströmabschnitt 140 des Innenraums 106 fluidwirksam ab.

Über die Tauchrohre 136 ist eine Fluidverbindung zwischen dem Zyklonabscheideraum 126 unterhalb der Trennwand 138 und dem Ausströmabschnitt 140 oberhalb der Trennwand 138 gebildet.

Ein in den Einströmabschnitt 120 hineinströmender Rohgasstrom kann somit durch die Einlassöffnung 124 in den Zyklonabscheideraum 126 einströmen und schließlich durch das Tauchrohr 136 hindurch in den Ausströmabschnitt 140 gelangen. Der Ausströmabschnitt 140 schließlich ist an seinem der Ausströmseite 110 zugewandten Ende geöffnet, so dass der gereinigte Gasstrom schließlich den Innenraum 106 verlassen kann.

An einem bezüglich der Strömungsrichtung hinteren Ende des Ausströmabschnitts 140 ist vorzugsweise eine Nachabscheidestufe 142, insbesondere ein Filterelement, vorzugsweise eine Paintstopmatte, angeordnet.

Bei der in den Fig. 1 bis 3 dargestellten Ausführungsform des Abscheidemoduls 100 sind mehrere, insbesondere zwei, Einströmabschnitte 120 und mehrere, insbesondere zwei, den Einströmabschnitt 120 zugeordnete Ausströmabschnitte 140 vorgesehen.

Jeweils ein Einströmabschnitt 120 samt den darin angeordneten Zyklonabscheideelementen 112 und dem zugehörigen Ausströmabschnitt 140 bildet eine Abscheideebene 144 des Abscheidemoduls 100.

Insbesondere sind zwei solcher Abscheideebenen 144 vorgesehen, welche insbesondere bezüglich der Schwerkraftrichtung g übereinander angeordnet sind.

Die Abscheideebenen 144 sind vorzugsweise unabhängig voneinander mit dem Gasstrom durchströmbar.

Mit Hinblick auf eine optimierte Abscheidewirkung sowie mit Hinblick auf einen möglichst geringen Druckverlust beim Durchströmen des Abscheidemoduls 100 sind bei dem Abscheidemodul 100 mehrere, beispielsweise 14, Zyklonabscheideelemente 112 vorgesehen.

Diese Zyklonabscheideelemente 112 werden von dem in den Einströmabschnitt 120 einströmenden Rohgas umströmt, so dass insbesondere eine Außenseite 146 der als Prallabscheideelemente 122 dienenden Zyklonkörper 118 eine Abscheidefläche bildet. An den Außenseiten 146 der Zyklonkörper 118 abgeschiedene Verunreinigungen können insbesondere mittels einer Auffangwanne 148, welche unterhalb der Zyklonkörper 118 ausgebildet und/oder angeordnet ist, aufgefangen werden.

Der die Zyklonkörper 118 umgebende Raum ist insbesondere ein Prallabscheideraum 150.

Insbesondere ist somit die Umgebung 128 der Zyklonkörper 118 ein Prallabscheideraum 150.

Zur Druckverlustminimierung sind die Zyklonabscheideelemente 112 parallel zueinander durchströmbar.

Ferner sind die Einlasskanäle 125 vorzugsweise so ausgebildet, dass sich eine optimierte Zyklonströmung innerhalb der Zyklonkörper 118 ergibt.

Durch trichterförmig, insbesondere trompetenförmig, ausgebildete Tauchrohre 136 kann zudem im Übergang zum jeweiligen Ausströmabschnitt 140 eine Druckverlustreduktion erzielt werden.

Unter einer Trompetenform ist dabei insbesondere eine sich längs der Strömungsrichtung des Gasstroms zunehmend stärker erweiternde Form des Tauchrohrs 136 zu verstehen.

Beim Durchströmen der Zyklonabscheideelemente 112 werden insbesondere an einer Innenseite 152 der Zyklonkörper 118 Verunreinigungen abgeschieden, so dass auch die jeweilige Innenseite 152 eine Abscheidefläche bildet.

Ein Großteil der im Betrieb des Abscheidemoduls 100 abgeschiedenen Verunreinigungen wird somit insbesondere an den Zyklonkörpern 118 der Zyklonabscheideelemente 112 abgeschieden.

Insbesondere dann, wenn es sich bei den abgeschiedenen Verunreinigungen um fließfähige, beispielsweise flüssige, Stoffe handelt, können diese Verunreinigungen längs der Schwerkraftrichtung g nach unten abfließen und sich somit insbesondere in der Auffangwanne 148 der jeweiligen Abscheideebene 144 und/oder in einem Bodenbereich des jeweiligen Zyklonkörpers 118 ansammeln.

Die abgeschiedenen Verunreinigungen beeinträchtigen somit die Durchströmung des Abscheidemoduls 100 nicht oder zumindest nur in geringem Maße.

Das Abscheidemodul 100 kann somit über einen langen Zeitraum hinweg zur Reinigung des Rohgasstroms verwendet werden.

Die abgeschiedenen Verunreinigungen sowie Druckunterschiede können zu einer mechanischen und/oder statischen Belastung der Bauteile des Abscheidemoduls 100 führen.

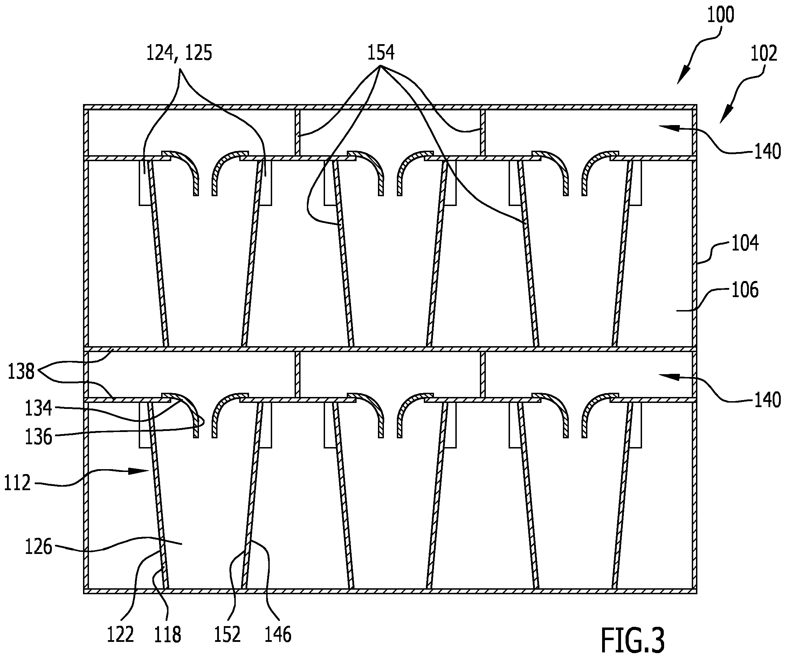

Zur Verstärkung des Abscheidemoduls 100 können daher insbesondere Stützelemente 154 vorgesehen sein (siehe insbesondere Fig. 3).

Die Stützelemente 154 sind dabei beispielsweise in dem jeweiligen Ausströmabschnitt 140 angeordnet.

Ferner sind auch in dem jeweiligen Einströmabschnitt 120 vorzugsweise ein oder mehrere Stützelemente 154 angeordnet.

Die Stützelemente 154 in dem jeweiligen Einströmabschnitt 120 werden dabei insbesondere durch die Zyklonkörper 118 gebildet.

Insbesondere können mittels der Stützelemente 154 Trennwände 138 und somit auch mindestens eine Auffangwanne 148 bezüglich der Schwerkraftrichtung g nach unten hin abgestützt werden.

Insbesondere dann, wenn die abzuscheidenden Verunreinigungen sich nicht mehr von dem Abscheidemodul 100 lösen lassen, ohne das Abscheidemodul 100 zu bestätigen oder zu zerstören, ist es vorteilhaft, wenn das Abscheidemodul 100 ein Einwegprodukt ist, welches insbesondere einfach und umweltfreundlich recycelbar ist.

Beispielsweise kann vorgesehen sein, dass das Abscheidemodul 100 vollständig oder zumindest größtenteils aus Papier-, Karton- oder sonstigen Faserwerkstoffen gebildet ist.

Insbesondere sind mehrere Bauteile des Abscheidemoduls 100 vorzugsweise Faserformteile, welche durch Nassformen, Pressen und anschließendes Trocknen hergestellt sind.

Mehrere Bauteile des Abscheidemoduls 100, insbesondere die Zyklonkörper 118, die Zyklondeckel 134, die Tauchrohre 136 und/oder die Trennwände 138 sind vorzugsweise in großer Anzahl einfach herstellbar und jeweils für sich in großer Zahl kompakt stapelbar.

Beispielsweise kann vorgesehen sein, dass die Zyklonkörper 118 einen Öffnungswinkel von mindestens ungefähr 8° oder mindestens ungefähr 6,5° aufweisen, wodurch einerseits eine einfache Entformung bei der Herstellung des Zyklonkörpers 118 und andererseits eine einfache Stapelung mehrerer Zyklonkörper 118 möglich ist.

Das Gehäuse 104 ist vorzugsweise ein Karton, welcher insbesondere faltbar ist.

Mehrere Abscheidemodule 100 sind somit in einem zerlegten Zustand besonders kompakt transportierbar und insbesondere durch einfaches Zusammenstecken und optionaler zusätzlicher Fixierung einfach fertigstellbar.

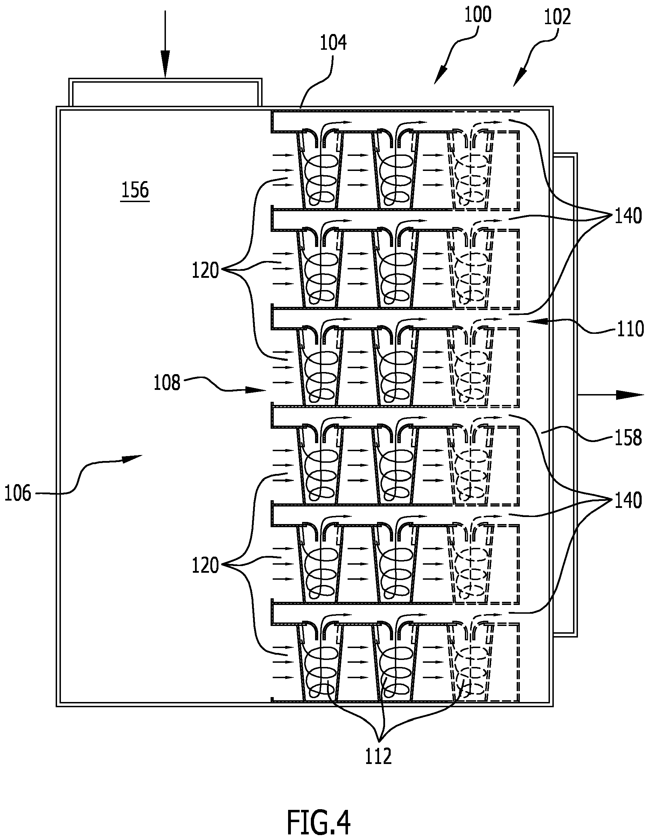

Eine in Fig. 4 dargestellte alternative Ausführungsform eines Abscheidemoduls 100 unterscheidet sich von der in den Fig. 1 bis 3 dargestellten Ausführungsform im Wesentlichen dadurch, dass der Innenraum 106 eine Einströmkammer 156 und eine Ausströmkammer 158 umfasst.

Die Einströmkammer 156 schließt sich an die Einströmseite 108 an und dient der Verteilung des einströmenden Rohgasstroms auf die mehreren Einströmabschnitte 120.

Die Ausströmkammer 158 grenzt an die Ausströmseite 110 an und dient der Zusammenführung der aus den Ausströmabschnitten 140 ausströmenden Gasströme, insbesondere um letztlich einen gemeinsamen Reingasstrom aus dem Abscheidemodul 100 abzuführen.

Bei weiteren Varianten von Abscheidemodulen 100 können auch nur eine Einströmkammer 156 oder nur eine Ausströmkammer 158 vorgesehen sein.

Ferner können eine Einströmkammer 156 und/oder eine Ausströmkammer 158 für jeweils nur ein einziges Abscheidemodul 100 oder aber für mehrere Abscheidemodule 100 vorgesehen sein.

Im Übrigen stimmt die in Fig. 4 dargestellte alternative Ausführungsform des Abscheidemoduls 100 hinsichtlich Aufbau und Funktion mit der in den Fig. 1 bis 3 beschriebenen Ausführungsform überein, so dass auf deren Beschreibung insoweit Bezug genommen wird.

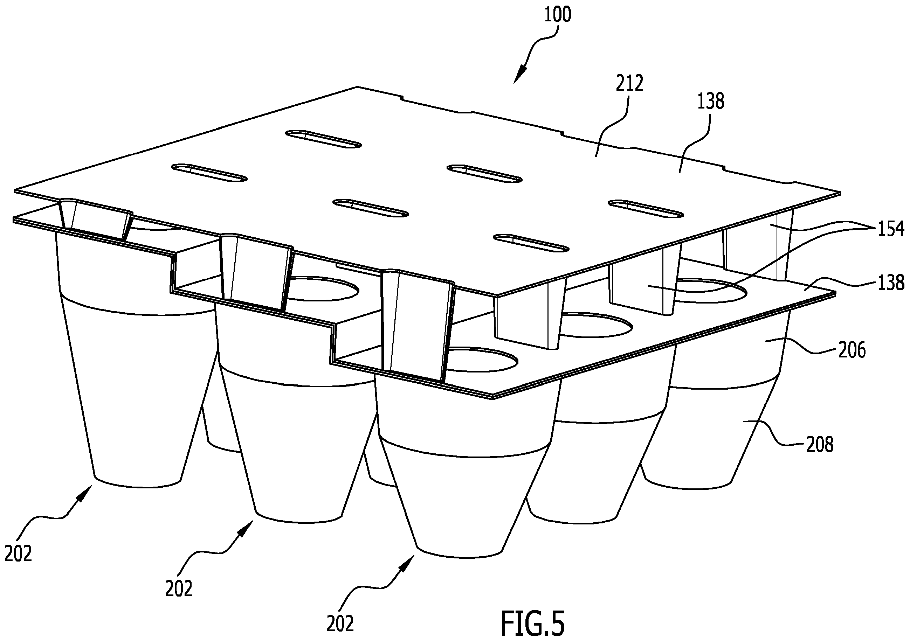

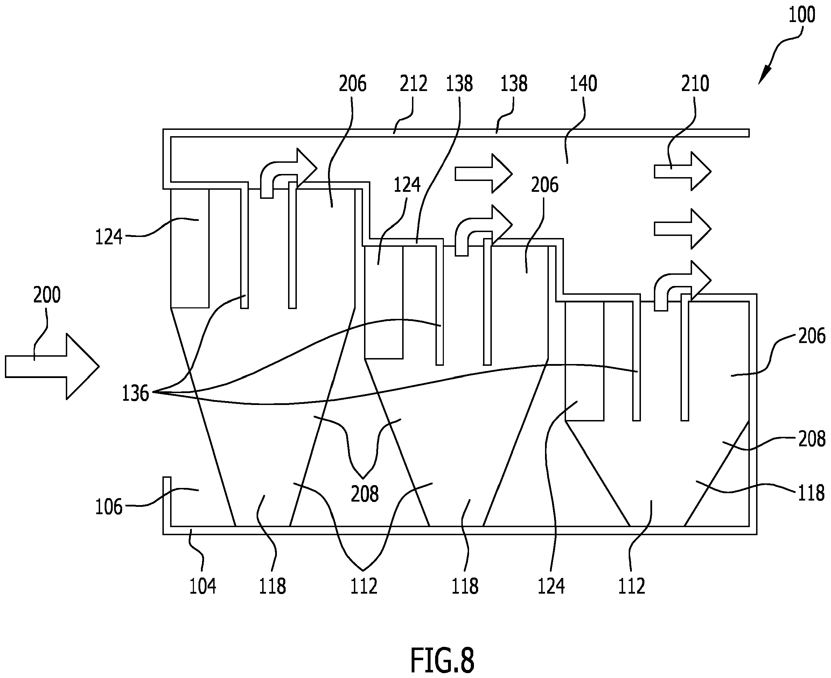

Eine in den Fig. 5 bis 8 dargestellte alternative Ausführungsform eines Abscheidemoduls 100 unterscheidet sich von der in den Fig. 1 bis 3 dargestellten Ausführungsform im Wesentlichen dadurch, dass das Abscheidemodul 100 mehrere längs einer Einströmrichtung 200 aufeinanderfolgende Reihen 202 von Zyklonabscheideelementen 112 umfasst, wobei die Reihen 202 aus Zyklonabscheideelementen 112 voneinander verschieden dimensionierte Zyklonabscheideelemente 112 umfassen.

Insbesondere sind die Zyklonkörper 118 der Zyklonabscheideelemente 112 unterschiedlich hoch ausgebildet.

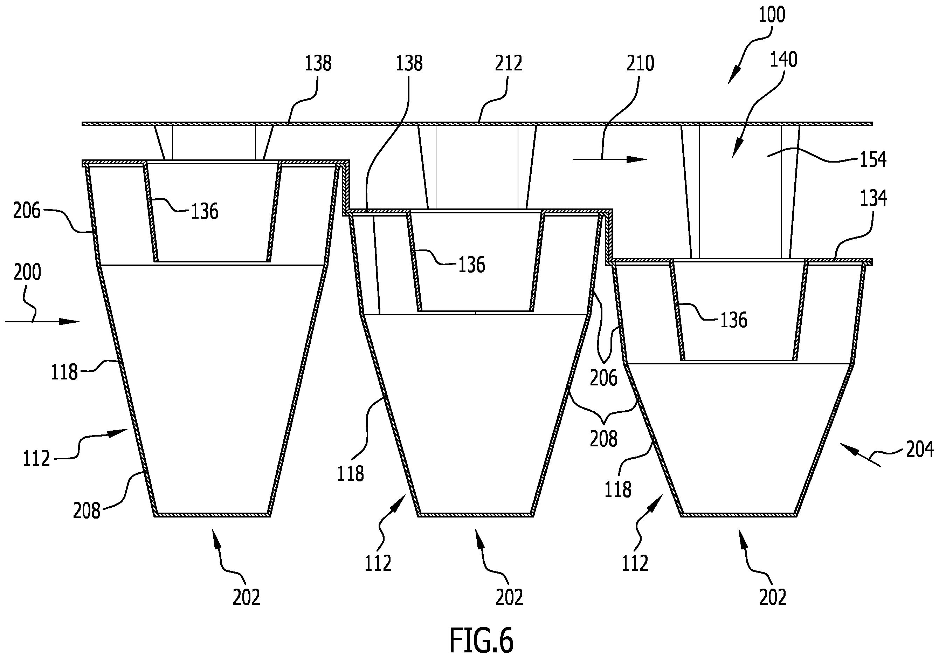

In der in Fig. 6 dargestellten, vertikal und längs der Einströmrichtung 200 geschnittenen Ansicht des Abscheidemoduls 100 sind die Zyklonabscheideelemente 112, welche längs der Einströmrichtung 200 aufeinander folgen, mit abnehmender Höhe der Zyklonkörper 118 angeordnet.

Die in der Einströmrichtung 200 aufeinanderfolgenden Zyklonabscheideelemente 112 bilden insbesondere eine Zeile 204 aus Zyklonabscheideelementen 112.

Die Tauchrohre 136 der Zyklonabscheideelemente 112 sind für jedes Zyklonabscheideelemente 112 vorzugsweise im Wesentlichen identisch ausgebildet.

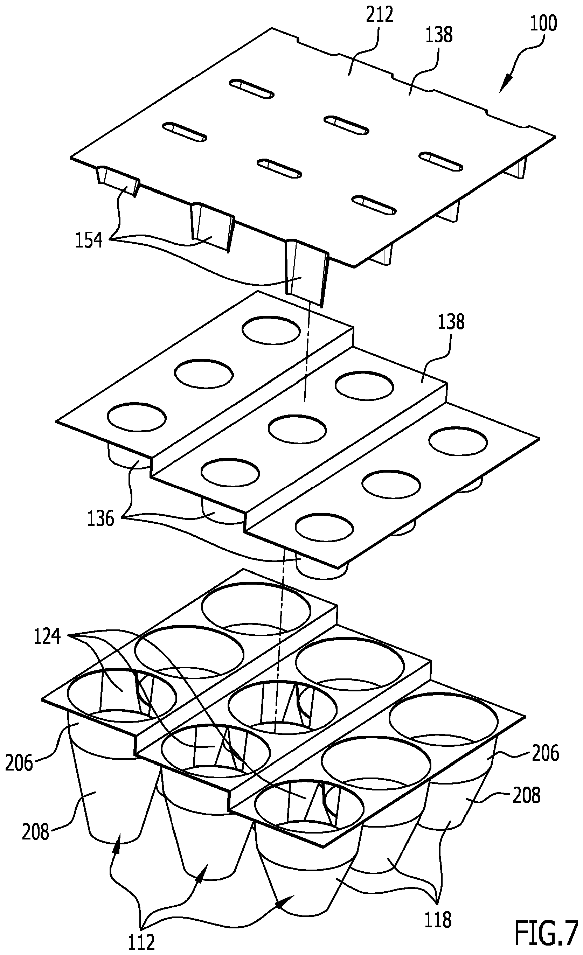

Zudem sind bei den Zyklonkörpern 118 jeweils im Wesentlichen identisch ausgebildete Einlassteile 206 der Zyklonkörper 118 vorgesehen. In diesen Einlassteilen 206 sind die Einlassöffnungen 124 angeordnet und/oder ausgebildet (siehe Fig. 7).

Umkehrteile 208 der Zyklonkörper 118 sind hingegen vorzugsweise unterschiedlich dimensioniert, insbesondere weisen diese unterschiedliche Höhen auf.

Die die Zyklonabscheideelemente 112 abdeckende Trennwand 138, welche insbesondere die Zyklondeckel 134 und vorzugsweise auch die Tauchrohre 136 bildet, ist bei der in den Fig. 5 bis 8 dargestellten Ausführungsform des Abscheidemoduls 100 vorzugsweise gestuft ausgebildet. Insbesondere ergibt sich hierdurch ein längs einer parallel zur Einströmrichtung 200 verlaufenden Ausströmrichtung 210 zunehmender Strömungsquerschnitt des Ausströmabschnitts 140, wodurch insbesondere ein Strömungswiderstand des Abscheidemoduls 100 reduziert werden kann.

Durch die unterschiedliche Dimensionierung der Umkehrteile 208 der Zyklonabscheideelemente 112 kann vorzugsweise eine höchstens abschnittsweise Abschattung der Einlassöffnungen 124 realisiert werden. Insbesondere ragen die Einlassöffnungen 124 nach oben und/oder nach unten und/oder seitlich über die längs der Einströmrichtung 200 davor angeordneten Zyklonabscheideelementen 112 hervor, wodurch eine Einströmung in die Einlassöffnungen 124 und somit eine Abscheidewirkung optimiert werden kann.

Wie insbesondere den Fig. 5 bis 7 zu entnehmen ist, weist eine weitere Trennwand 138 vorzugsweise mehrere Stützelemente 154 auf, welche insbesondere als hohl ausgebildete Vorsprünge ausgebildet sind und somit einerseits der Einhaltung eines Abstands zwischen den zwei Trennwänden 138 und andererseits auch der Aufnahme von abgeschiedenen Verunreinigungen dienen können. Insbesondere dienen die hohlen Stützelemente 154 vorzugsweise als Reservoir zur Aufnahme von flüssigen Verunreinigungen, welche aus dem zu reinigenden Rohgasstrom abgeschieden wurden.

Die mit den Stützelementen 154 versehene Trennwand 138 bildet dabei insbesondere einen Zwischenboden 212, auf welchem eine weitere Abscheideebene 144, beispielsweise eine durch die in den Fig. 5 bis 7 dargestellte Bauteilkombination gebildete Abscheideebene 144, stapelbar ist.

Im Übrigen stimmt die in den Fig. 5 bis 8 dargestellte Ausführungsform eines Abscheidemoduls 100 hinsichtlich Aufbau und Funktion mit der in den Fig. 1 bis 3 dargestellten Ausführungsform überein, so dass auf deren vorstehende Beschreibung insoweit Bezug genommen wird.

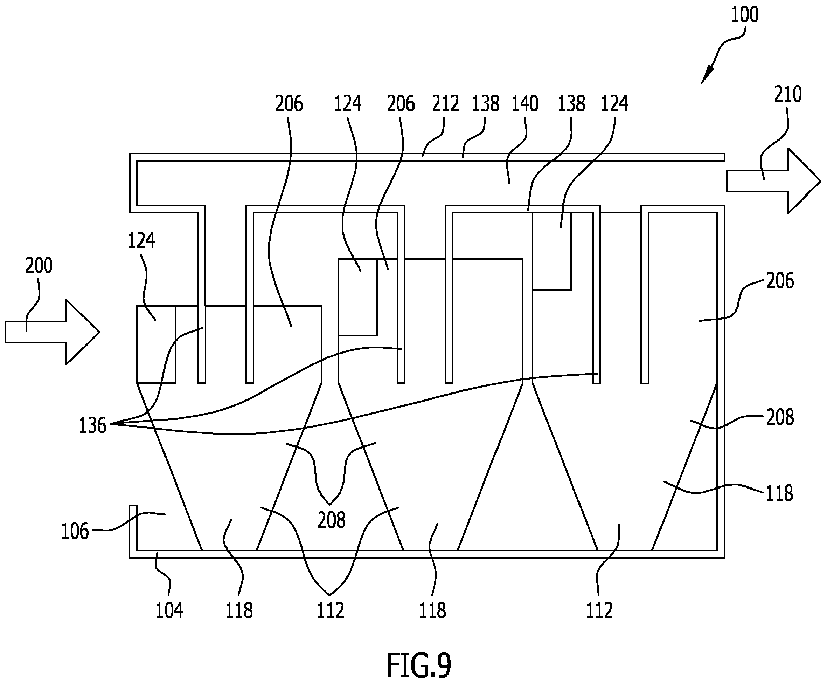

Eine in Fig. 9 dargestellte alternative Ausführungsform eines Abscheidemoduls 100 unterscheidet sich von der in den Fig. 5 bis 8 dargestellten Ausführungsform im Wesentlichen dadurch, dass der Ausströmabschnitt 140 längs der Ausströmrichtung 210 einen zumindest näherungsweise konstanten Querschnitt aufweist.

Die Zyklonabscheideelemente 112 sind dennoch unterschiedlich dimensioniert, insbesondere diejenigen, welche längs der Einströmrichtung 200 aufeinanderfolgend angeordnet sind.

Hierbei sind vorzugsweise stets identische Umkehrteile 208 der Zyklonkörper 118, jedoch unterschiedlich dimensionierte, insbesondere unterschiedlich hohe, Einlassteile 206 vorgesehen.

Längs der Einströmrichtung 200 sind dabei insbesondere zunehmend größere Einlassteile 206 vorgesehen, wodurch letztlich die jeweils vorhergehenden Zyklonabscheideelemente 112 überragende Einlassteile 206 und somit auch Einlassöffnungen 124 gebildet werden, was einer optimierten Anströmung und somit Abscheidung zuträglich sein kann.

Zur Kompensation der unterschiedlich dimensionierten Zyklonabscheideelemente 112 sind insbesondere unterschiedlich weit in den Innenraum der Zyklonkörper 118 hineinragende Tauchrohre 136 vorgesehen.

Im Übrigen stimmt die in Fig. 9 dargestellte Ausführungsform eines Abscheidemoduls 100 hinsichtlich Aufbau und Funktion mit der in den Fig. 5 bis 8 dargestellten Ausführungsform überein, so dass auf deren vorstehende Beschreibung insoweit Bezug genommen wird.

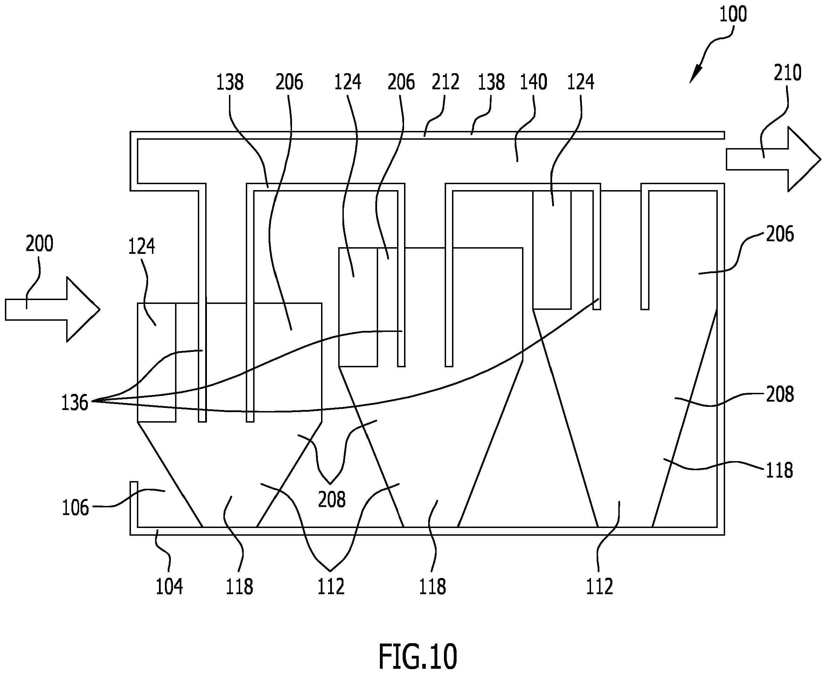

Eine in Fig. 10 dargestellte weitere Ausführungsform eines Abscheidemoduls 100 unterscheidet sich von der in Fig. 9 dargestellten Ausführungsform im Wesentlichen dadurch, dass die Einlassteile 206 sämtlicher Zyklonabscheideelemente 112 im Wesentlichen identisch ausgebildet sind, jedoch die Umkehrteile 208 unterschiedlich hoch sind, insbesondere die Umkehrteile 208 derjenigen Zyklonabscheideelemente 112, welche längs der Einströmrichtung 200 aufeinanderfolgend angeordnet sind.

Auch hierdurch kann sich eine optimierte Anströmung der Einlassöffnungen 124 und somit eine optimierte Abscheidung von Verunreinigungen ergeben.

Bei der in Fig. 10 dargestellten Ausführungsform des Abscheidemoduls 100 sind die Tauchrohre 136 unterschiedlich lang ausgebildet. Insbesondere ragen die Tauchrohre 136 jeweils so weit in die Zyklonabscheideelemente 112, insbesondere in die Zyklonkörper 118, hinein, dass die Tauchrohre 136 jeweils in einem Übergangsbereich zwischen dem Einlassteil 206 und dem Umkehrteil 208 des jeweiligen Zyklonkörpers 118 enden.

Im Übrigen stimmt die in Fig. 10 dargestellte Ausführungsform des Abscheidemoduls 100 hinsichtlich Aufbau und Funktion mit der in Fig. 9 dargestellten Ausführungsform überein, so dass auf deren vorstehende Beschreibung insoweit Bezug genommen wird.

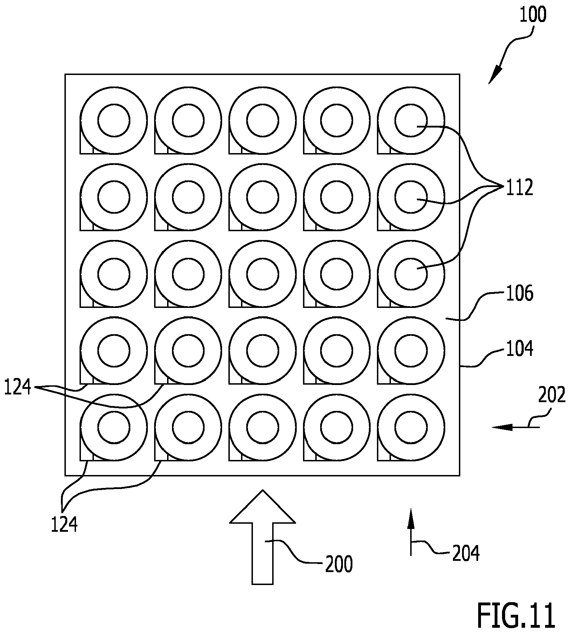

In Fig. 11 ist eine schematische horizontale Schnittdarstellung einer Ausführungsform eines Abscheidemoduls 100 vorgesehen, welche hinsichtlich des grundsätzlichen Aufbaus beispielsweise der in den Fig. 1 bis 3 dargestellten Ausführungsform entspricht, jedoch fünf Reihen 202 und/oder fünf Zeilen 204 aus jeweils fünf Zyklonabscheideelementen 112 umfasst.

Die Zyklonabscheideelemente 112 sind dabei vollkommen identisch miteinander ausgebildet, so dass insbesondere die Einlassöffnungen 124 sämtlicher Zyklonabscheideelemente 112 bezüglich der Einströmrichtung 200 beispielsweise linksseitig angeordnet sind.

Hierdurch kann sich eine Asymmetrie bei der Durchströmung des Einströmabschnitts 120 und somit der Anströmung der Zyklonabscheideelemente 112 ergeben, da insbesondere in den dem Gehäuse 104 zugewandten Randbereichen des Innenraums 106 eine beeinträchtigte Strömung erhalten werden kann.

Bei einer vergleichsweise großen Anzahl von Zyklonabscheideelementen 112, wie beispielsweise bei der in Fig. 11 dargestellten Ausführungsform, kann dieser Effekt noch vernachlässigbar sein.

Insbesondere dann, wenn jedoch größere Zyklonabscheideelemente 112 und/oder eine geringere Anzahl von Zyklonabscheideelementen 112 vorgesehen ist, kann die Störung der Strömung in den Randbereichen sehr nachteilig werden.

Vorzugsweise sind die Einlassöffnungen 124 daher Strömungskanälen 214 zugewandt und/oder zugeordnet, welche insbesondere zwischen zwei Reihen 204 aus Zyklonabscheideelementen 112 gebildet und/oder angeordnet sind.

Jeder Strömungskanal 214 ist dabei vorzugsweise beidseitig von Zyklonabscheideelementen 112 begrenzt.

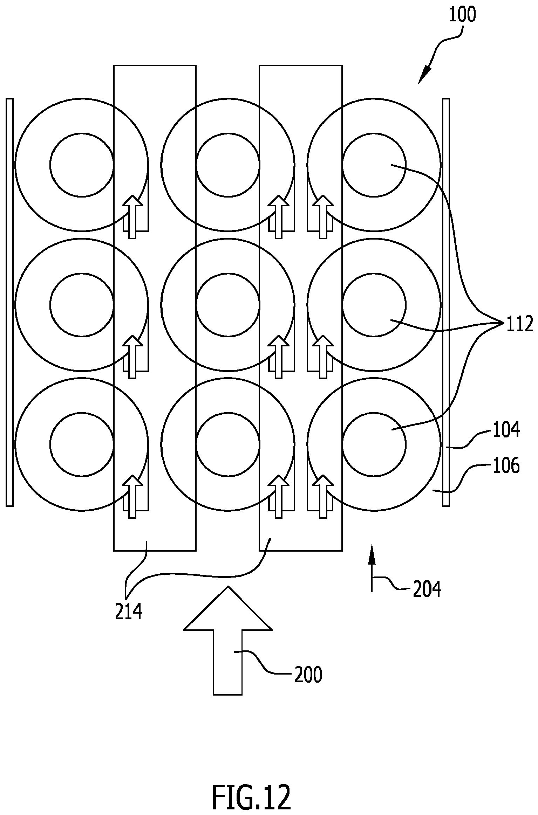

Wie insbesondere Fig. 12 zu entnehmen ist, sind die Einlassöffnungen 124 dann vorzugsweise nicht dem Gehäuse 104, sondern den Strömungskanälen 214 zugewandt angeordnet.

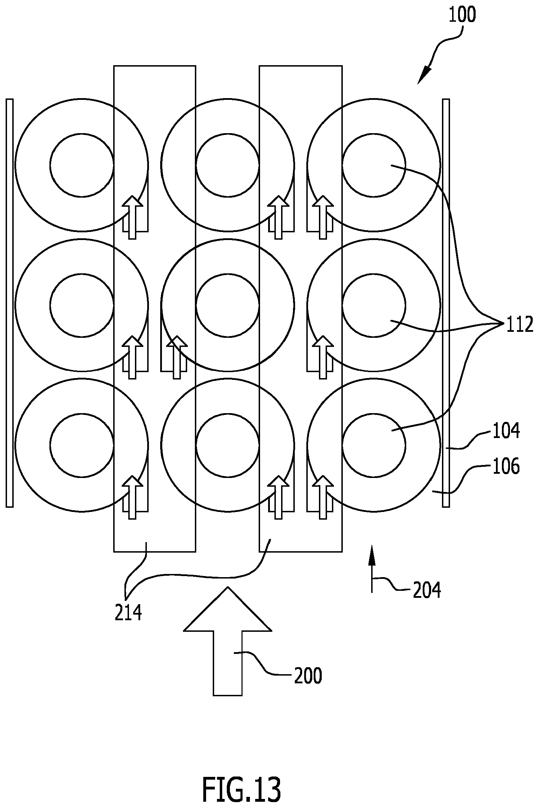

Dies kann jedoch zu einem sehr ungleichmäßigen Strömungsbild und somit zu einer unzureichenden Abscheidewirkung führen, wenn beispielsweise wie in Fig. 12 dargestellt einem Strömungskanal 214 doppelt so viele Einlassöffnungen 124 zugeordnet sind wie einem weiteren Strömungskanal 214. Vorzugsweise ist daher vorgesehen, dass den Strömungskanälen 214 gleichmäßig viele Einlassöffnungen 124 zugeordnet sind, wie dies insbesondere in Fig. 13 dargestellt ist. Dies kann insbesondere dadurch erzielt werden, dass in einer Reihe 204 längs der Einströmrichtung 200 aufeinanderfolgend angeordnete Zyklonabscheideelemente 112 unterschiedlichen Strömungskanälen 214 zugeordnete Einlassöffnungen 124 aufweisen.

Insbesondere kann hierdurch eine Vergleichmäßigung derart erzielt werden, dass jedem Strömungskanal 214 abgesehen von der geometrisch bedingten Abweichung von exakt 1 dieselbe Anzahl von Einlassöffnungen 124 zugeordnet ist.

Die Anordnung und/oder Ausrichtung der Einlassöffnungen 124 gemäß der in Fig. 13 dargestellten Ausführungsform des Abscheidemoduls 100 kann grundsätzlich zur Optimierung bei sämtlichen anderen beschriebenen Ausführungsformen von Abscheidemodulen 100 vorgesehen sein.

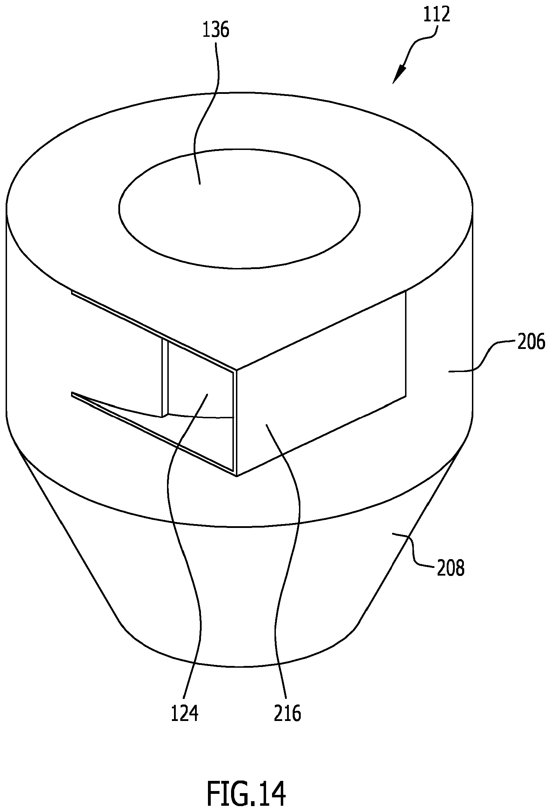

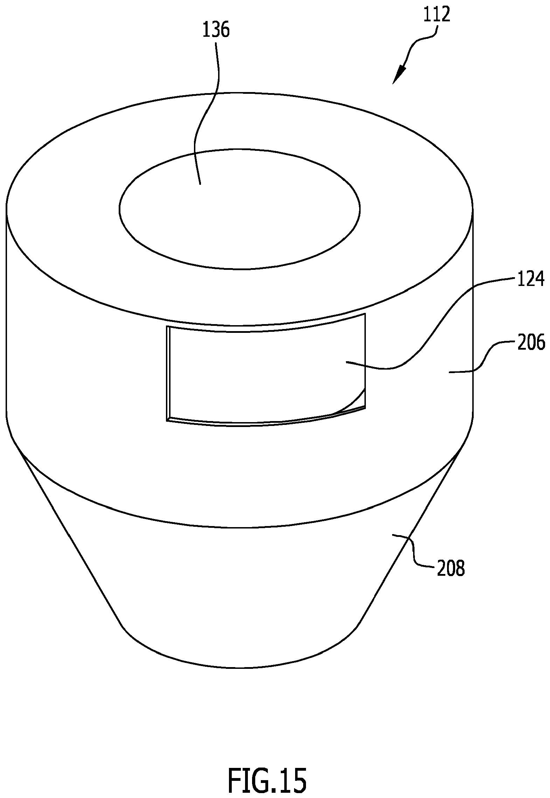

Wie aus einem Vergleich der Fig. 14 und 15 hervorgeht, können die Einlassöffnungen 124 beispielsweise als Einlassstutzen 216 ausgebildet sein (siehe Fig. 14) oder aber durch eine Ausnehmung in einer im Wesentlichen zylindermantelförmigen oder konusmantelförmigen Wandung des Einlassabschnitts 206 gebildet sein (siehe Fig. 15).

Die Verwendung eines Einlassstutzens 216 gemäß Fig. 14 kann eine optimierte Durchströmung innerhalb des Zyklonkörpers 118 zur Folge haben. Die Verwendung einer einfachen Ausnehmung in dem Einlassteil 206 gemäß Fig. 15 kann hingegen eine besonders einfache Herstellung des Zyklonkörpers 118 ermöglichen.

Grundsätzlich eignen sich beide Varianten der Zyklonabscheideelemente 112 gemäß den Fig. 14 und 15 für sämtliche beschriebenen Abscheidemodule 100.

Durch die Verwendung von Abscheidemodulen 100 der vorstehend beschriebenen Art können vorzugsweise die Herstellungskosten, die Transportkosten und/oder die Lagerkosten reduziert und zudem eine Abscheidung mit hoher Abscheideeffizienz und geringem Druckverlust realisiert werden.

## Patentansprüche

1. Abscheidemodul (100) für eine Abscheidevorrichtung (102) zum Abscheiden von Verunreinigungen aus einem Rohgasstrom, wobei das Abscheidemodul (100) Folgendes umfasst:
ein Gehäuse (104), welches einen Innenraum (106) umgibt, der zum Abscheiden von Verunreinigungen aus dem Rohgasstrom mit dem Rohgasstrom durchströmbar ist,
wobei in dem Innenraum (106) mehrere Zyklonabscheideelemente (112) angeordnet sind, wobei die Zyklonabscheideelemente (112) jeweils einen Zyklonkörper (118) umfassen, welcher einen Zyklonabscheideraum (126) umgibt,
wobei sowohl eine dem Zyklonabscheideraum (126) zugewandte Innenseite (152) des Zyklonkörpers (118) als auch eine dem Zyklonabscheideraum (126) abgewandte Außenseite (146) des Zyklonkörpers (118) Abscheideflächen zum Abscheiden von Verunreinigungen aus dem Rohgasstrom bilden, wobei die Zyklonkörper (118) in einem Einströmabschnitt (120) des Innenraums (106) angeordnet sind und Prallabscheideelemente (122) zum Abscheiden von Verunreinigungen aus dem Rohgasstrom bilden, wobei die Zyklonabscheideelemente (112) jeweils eine oder mehrere Einlassöffnungen (124) zur Einleitung des Rohgasstroms in die Zyklonabscheideelemente (112) umfassen, wobei jede Einlassöffnung (124) eine Umgebung (128) des jeweiligen Zyklonabscheideelements (112) fluidwirksam mit dem Zyklonabscheideraum (126) verbindet, **dadurch gekennzeichnet, dass** das Abscheidemodul (100) mehrere Abscheideebenen (144) umfasst, welche jeweils mehrere in einer Ebene benachbart zueinander angeordnete Zyklonabscheideelemente (112) umfassen.

2. Abscheidemodul (100) nach Anspruch 1, **dadurch gekennzeichnet, dass** das Gehäuse (104) und/oder die Zyklonabscheideelemente (112), insbesondere das gesamte Abscheidemodul (100), Faserformteile umfassen oder aus Faserformteilen gebildet sind.

3. Abscheidemodul (100) nach einem der Ansprüche 1 oder 2, **dadurch gekennzeichnet, dass** zwei oder mehr Einlassöffnungen (124) durch zumindest näherungsweise tangential in einen Zyklonabscheideraum (126) des jeweiligen Zyklonabscheideelements (112) hinein gerichtete Einlasskanäle (125) gebildet sind.

4. Abscheidemodul (100) nach einem der Ansprüche 1 bis 3, **dadurch gekennzeichnet, dass** das Abscheidemodul (100) mehrere Einströmabschnitte (120) und mehrere Ausströmabschnitte (140) umfasst, welche alternierend angeordnet sind.

5. Abscheidemodul (100) nach einem der Ansprüche 1 bis 4, **dadurch gekennzeichnet, dass** Zyklonkörper (118) der Zyklonabscheideelemente (112) Stützelemente (154) zum Abstützen einer oder mehrerer Trennwände (138) sind, welche den Innenraum (106) des Gehäuses (104) in mehrere Abschnitte, insbesondere einen oder mehrere Einströmabschnitte (120) und/oder einen oder mehrere Ausströmabschnitte (140), unterteilen.

6. Abscheidemodul (100) nach einem der Ansprüche 1 bis 5, **dadurch gekennzeichnet, dass**
a) die Zyklonabscheideelemente (112) jeweils einen Zyklonkörper (118), einen Zyklondeckel (134) und/oder ein Tauchrohr (136) umfassen, wobei jeweils mehrere Zyklonkörper (118), mehrere Zyklondeckel (134) und/oder mehrere Tauchrohre (136) aufeinander stapelbar sind; und/oder
b) die Zyklonabscheideelemente (112) jeweils ein zumindest näherungsweise trichterförmiges Tauchrohr (136) umfassen, welches in einen Zyklonkörper (118) des jeweiligen Zyklonabscheideelements (112) hineinragt.

7. Abscheidemodul (100) nach einem der Ansprüche 1 bis 6, **dadurch gekennzeichnet, dass** das Abscheidemodul (100) eine Prallabscheidestufe (114), eine Zyklonabscheidestufe (116) und/oder eine Nachabscheidestufe (142) umfasst.

8. Abscheidemodul (100) nach einem der Ansprüche 1 bis 7, **dadurch gekennzeichnet, dass** das Abscheidemodul (100) mehrere Zeilen (204) aus Zyklonabscheideelementen (112) umfasst,
wobei die Zyklonabscheideelemente (112) einer jeden Zeile (204) längs einer Einströmrichtung (200), in welcher der zu reinigende Rohgasstrom in den Innenraum (106) des Gehäuses (104) einströmt, aufeinanderfolgend angeordnet sind,
wobei zwischen jeweils zwei Zeilen (204) aus Zyklonabscheideelementen (112) jeweils ein Strömungskanal (214) gebildet ist,
wobei die Zyklonabscheideelemente (112) mindestens einer Zeile (204) aus Zyklonabscheideelementen (112) zwei Strömungskanälen (214) zugeordnete und/oder zugewandte Einlassöffnungen (124) aufweisen.

9. Abscheidemodul (100) nach einem der Ansprüche 1 bis 8, **dadurch gekennzeichnet, dass** das Abscheidemodul (100) mehrere Zeilen (204) aus Zyklonabscheideelementen (112) umfasst,
wobei die Zyklonabscheideelemente (112) einer jeden Zeile (204) längs einer Einströmrichtung (200), in welcher der zu reinigende Rohgasstrom in den Innenraum (106) des Gehäuses (104) einströmt, aufeinanderfolgend angeordnet sind,
wobei Einlassöffnungen (124) mehrerer, insbesondere sämtlicher, Zyklonabscheideelemente (112), welche längs der Einströmrichtung (200) aufeinanderfolgend angeordnet sind, a) in einer parallel zu Zentralachsen (130) der Zyklonabscheideelemente (112) verlaufenden Richtung und/oder b) in einer senkrecht zu Zentralachsen (130) der Zyklonabscheideelemente (112) und/oder senkrecht zur Einströmrichtung (200) verlaufenden Richtung versetzt zueinander angeordnet sind.

10. Abscheidemodul (100) nach einem der Ansprüche 1 bis 9, **dadurch gekennzeichnet,**
**dass** ein Einströmabschnitt (120) des Abscheidemoduls (100) sich längs einer Einströmrichtung (200), in welcher der zu reinigende Rohgasstrom in den Innenraum (106) des Gehäuses (104) einströmt, verjüngt oder erweitert und/oder
**dass** ein Ausströmabschnitt (140) des Abscheidemoduls (100) sich längs einer Ausströmrichtung (210), in welcher ein durch Reinigung des Rohgasstroms erhaltener Reingasstrom aus dem Innenraum (106) des Gehäuses (104) ausströmt, verjüngt oder erweitert.

11. Abscheidevorrichtung (102) zum Abscheiden von Verunreinigungen aus einen Rohgasstrom, wobei die Abscheidevorrichtung (102) Folgendes umfasst:
- mehrere Abscheidemodule (100) nach einem der Ansprüche 1 bis 10;
- mehrere Modulaufnahmen zur Aufnahme der Abscheidemodule (100);
- eine Rohgaszuführung zur Zuführung eines zu reinigenden Rohgasstroms zu den in den Modulaufnahmen angeordneten Abscheidemodulen (100);
- eine Reingasabführung zur Abführung eines mittels der Abscheidemodule (100) erhältlichen Reingasstroms.

12. Verfahren zur Herstellung eines Abscheidemoduls (100) nach einem der Ansprüche 1 bis 10, umfassend Folgendes:
Bereitstellen von Formteilen von Zyklonabscheideelementen (112);
Montieren und Festlegen derselben in einem Gehäuse (104).

13. Verfahren nach Anspruch 12, **dadurch gekennzeichnet, dass** die Formteile Faserformteile sind, welche insbesondere durch Nassformen, Pressen und anschließendes Trocknen hergestellt sind.

## Claims

1. Separating module (100) for a separating device (102) for separating contaminants from a raw gas stream, the separating module (100) comprising the following:
a housing (104) which surrounds an interior (106) through which the raw gas stream can flow for the separation of contaminants from the raw gas stream,
a plurality of cyclone separating elements (112) being arranged in the interior (106), the cyclone separating elements (112) each comprising a cyclone body (118) which surrounds a cyclone separating chamber (126), both an inner side (152) of the cyclone body (118) that faces the cyclone separating chamber (126) and an outer side (146) of the cyclone body (118) that faces away from the cyclone separating chamber (126) forming separating surfaces for separating contaminants from the raw gas stream, the cyclone bodies (118) being arranged in an inflow portion (120) of the interior (106) and forming impact separating elements (122) for separating contaminants from the raw gas stream, the cyclone separating elements (112) each comprising one or more inlet openings (124) for introducing the raw gas stream into the cyclone separating elements (112), each inlet opening (124) fluidically connecting an environment (128) of the relevant cyclone separating element (112) to the cyclone separating chamber (126), **characterized in that** the separating module (100) comprises a plurality of separating planes (144), each comprising a plurality of cyclone separating elements (112) arranged adjacent to one another in a plane.

2. Separating module (100) according to claim 1, **characterized in that** the housing (104) and/or the cyclone separating elements (112), in particular the entire separating module (100), comprise fiber molded parts or are formed from fiber molded parts.

3. Separating module (100) according to either claim 1 or claim 2,
**characterized in that** two or more inlet openings (124) are formed by inlet channels (125) directed at least approximately tangentially into a cyclone separating chamber (126) of the relevant cyclone separating element (112).

4. Separating module (100) according to any of claims 1 to 3, **characterized in that** the separating module (100) comprises a plurality of inflow portions (120) and a plurality of outflow portions (140) which are arranged alternately.

5. Separating module (100) according to any of claims 1 to 4, **characterized in that** cyclone bodies (118) of the cyclone separating elements (112) are support elements (154) for supporting one or more partition walls (138), which walls divide the interior (106) of the housing (104) into a plurality of portions, in particular one or more inflow portions (120) and/or one or more outflow portions (140).

6. Separating module (100) according to any of claims 1 to 5, **characterized in that**
a) the cyclone separating elements (112) each comprise a cyclone body (118), a cyclone lid (134) and/or a dip tube (136), a plurality of cyclone bodies (118), a plurality of cyclone lids (134) and/or a plurality of dip tubes (136) each being stackable one on top of the other; and/or
b) the cyclone separating elements (112) each comprise an at least approximately funnel-shaped dip tube (136) which projects into a cyclone body (118) of the relevant cyclone separating element (112).

7. Separating module (100) according to any of claims 1 to 6, **characterized in that** the separating module (100) comprises an impact separating stage (114), a cyclone separating stage (116) and/or a post-separating stage (142).

8. Separating module (100) according to any of claims 1 to 7, **characterized in that** the separating module (100) comprises a plurality of rows (204) of cyclone separating elements (112),
the cyclone separating elements (112) of each row (204) being arranged in succession along an inflow direction (200) in which the raw gas stream to be purified flows into the interior (106) of the housing (104),
a flow channel (214) being formed between each two lines (204) of cyclone separating elements (112),
the cyclone separating elements (112) of at least one row (204) of cyclone separating elements (112) having two inlet openings (124) associated with and/or facing flow channels (214).

9. Separating module (100) according to any of claims 1 to 8, **characterized in that** the separating module (100) comprises a plurality of rows (204) of cyclone separating elements (112),
the cyclone separating elements (112) of each row (204) being arranged in succession along an inflow direction (200) in which the raw gas stream to be purified flows into the interior (106) of the housing (104),
inlet openings (124) of a plurality of, in particular all, cyclone separating elements (112) which are arranged in succession along the inflow direction (200) being arranged offset to one another a) in a direction extending parallel to central axes (130) of the cyclone separating elements (112) and/or b) in a direction extending perpendicular to central axes (130) of the cyclone separating elements (112) and/or perpendicular to the inflow direction (200).

10. Separating module (100) according to any of claims 1 to 9, **characterized**
**in that** an inflow portion (120) of the separating module (100) tapers or widens along an inflow direction (200) in which the raw gas stream to be purified flows into the interior (106) of the housing (104), and/or
**in that** an outflow portion (140) of the separating module (100) tapers or widens along an outflow direction (210) in which a purified gas stream obtained by purifying the raw gas stream flows out of the interior (106) of the housing (104).

11. Separating device (102) for separating contaminants from a raw gas stream, wherein the separating device (102) comprises:
- a plurality of separating modules (100) according to any of claims 1 to 10;
- a plurality of module receptacles for receiving the separating modules (100);
- a raw gas supply for supplying a raw gas stream to be purified to the separating modules (100) arranged in the module receptacles;
- a purified gas discharge for discharging a clean gas stream obtainable by means of the separating modules (100).

12. Method for producing a separating module (100) according to any of claims 1 to 10, comprising the following:
providing molded parts of cyclone separating elements (112);
mounting and fixing said parts in a housing (104).

13. Method according to claim 12, **characterized in that** the molded parts are molded fiber parts which are produced in particular by green sand molding, pressing and subsequent drying.

## Revendications

1. Module de séparation (100) pour un dispositif de séparation (102) permettant la séparation d'impuretés d'un flux de gaz brut, le module de séparation (100) comprenant les éléments suivants :
un boîtier (104), lequel entoure un espace intérieur (106) qui peut être traversé par le flux de gaz brut pour la séparation d'impuretés du flux de gaz brut,
plusieurs éléments de séparation à cyclone (112) étant disposés dans l'espace intérieur (106), les éléments de séparation à cyclone (112) comprenant respectivement un corps de cyclone (118), lequel entoure un espace de séparation de cyclone (126), une face intérieure (152) du corps de cyclone (118) faisant face à l'espace de séparation de cyclone (126) ainsi qu'une face extérieure (146) du corps de cyclone (118) opposée à l'espace de séparation de cyclone (126) formant des surfaces de séparation pour la séparation d'impuretés du flux de gaz brut, les corps de cyclone (118) étant disposés dans une section d'entrée (120) de l'espace intérieur (106) et formant des éléments de séparation par impact (122) pour la séparation d'impuretés du flux de gaz brut, les éléments de séparation à cyclone (112) comprenant respectivement une ou plusieurs ouvertures d'admission (124) pour l'introduction du flux de gaz brut dans les éléments de séparation à cyclone (112), chaque ouverture d'admission (124) reliant de manière fluidique un environnement (128) de l'élément de séparation à cyclone (112) respectif à l'espace de séparation de cyclone (126),
**caractérisé en ce que** le module de séparation (100) comprend plusieurs plans de séparation (144), lesquels comprennent respectivement plusieurs éléments de séparation à cyclone (112) disposés adjacents les uns aux autres dans un plan.

2. Module de séparation (100) selon la revendication 1, **caractérisé en ce que** le boîtier (104) et/ou les éléments de séparation à cyclone (112), en particulier le module de séparation (100) entier, comprennent des pièces moulées en fibres ou sont formés de pièces moulées en fibres.

3. Module de séparation (100) selon l'une des revendications 1 ou 2,
**caractérisé en ce que** deux ouvertures d'admission (124) ou plus sont formées par des canaux d'admission (125) dirigés au moins approximativement tangentiellement vers l'intérieur d'un espace de séparation de cyclone (126) de l'élément de séparation à cyclone (112) respectif.

4. Module de séparation (100) selon l'une des revendications 1 à 3,
**caractérisé en ce que** le module de séparation (100) comprend plusieurs sections d'entrée (120) et plusieurs sections de sortie (140), lesquelles sont disposées en alternance.

5. Module de séparation (100) selon l'une des revendications 1 à 4,
**caractérisé en ce que** des corps de cyclone (118) des éléments de séparation à cyclone (112) sont des éléments d'appui (154) permettant l'appui d'une ou de plusieurs cloisons (138), lesquelles divisent l'espace intérieur (106) du boîtier (104) en plusieurs sections, en particulier une ou plusieurs sections d'entrée (120) et/ou une ou plusieurs sections de sortie (140).

6. Module de séparation (100) selon l'une des revendications 1 à 5,
**caractérisé en ce que**
a) les éléments de séparation à cyclone (112) comprennent respectivement un corps de cyclone (118), un couvercle de cyclone (134) et/ou un tube plongeur (136), respectivement plusieurs corps de cyclone (118), plusieurs couvercles de cyclone (134) et/ou plusieurs tubes plongeurs (136) pouvant être empilés les uns sur les autres ; et/ou
b) les éléments de séparation à cyclone (112) comprennent respectivement un tube plongeur (136) au moins approximativement en forme d'entonnoir, lequel fait saillie dans un corps de cyclone (118) de l'élément de séparation à cyclone (112) respectif.

7. Module de séparation (100) selon l'une des revendications 1 à 6,
**caractérisé en ce que** le module de séparation (100) comprend un étage de séparation par impact (114), un étage de séparation par cyclone (116) et/ou un étage de post-séparation (142).

8. Module de séparation (100) selon l'une des revendications 1 à 7,
**caractérisé en ce que** le module de séparation (100) comprend plusieurs lignes (204) composées d'éléments de séparation à cyclone (112),
les éléments de séparation à cyclone (112) de chaque ligne (204) étant disposés les uns à la suite des autres le long d'un sens d'entrée (200) dans lequel le flux de gaz brut à nettoyer entre dans l'espace intérieur (106) du boîtier (104),
respectivement un canal d'écoulement (214) étant formé entre respectivement deux lignes (204) composées d'éléments de séparation à cyclone (112),
les éléments de séparation à cyclone (112) d'au moins une ligne (204) composée d'éléments de séparation à cyclone (112) présentant des ouvertures d'admission (124) associées et/ou faisant face à deux canaux d'écoulement (214).

9. Module de séparation (100) selon l'une des revendications 1 à 8,
**caractérisé en ce que** le module de séparation (100) comprend plusieurs lignes (204) composées d'éléments de séparation à cyclone (112),
les éléments de séparation à cyclone (112) de chaque ligne (204) étant disposés les uns à la suite des autres le long d'un sens d'entrée (200) dans lequel le flux de gaz brut à nettoyer entre dans l'espace intérieur (106) du boîtier (104),
des ouvertures d'admission (124) de plusieurs, en particulier de tous les éléments de séparation à cyclone (112), lesquels sont disposés les uns à la suite des autres le long du sens d'entrée (200), étant disposées décalées les unes par rapport aux autres a) dans une direction s'étendant parallèlement aux axes centraux (130) des éléments de séparation à cyclone (112) et/ou b) dans une direction s'étendant perpendiculairement aux axes centraux (130) des éléments de séparation à cyclone (112) et/ou perpendiculairement au sens d'entrée (200).

10. Module de séparation (100) selon l'une des revendications 1 à 9, **caractérisé en ce**
**qu'**une section d'entrée (120) du module de séparation (100) se rétrécit ou s'élargit le long d'un sens d'entrée (200) dans lequel le flux de gaz brut à nettoyer entre dans l'espace intérieur (106) du boîtier (104) et/ou
**qu'**une section de sortie (140) du module de séparation (100) se rétrécit ou s'élargit le long d'un sens de sortie (210) dans lequel un flux de gaz pur obtenu par le nettoyage du flux de gaz brut sort de l'espace intérieur (106) du boîtier (104).

11. Dispositif de séparation (102) permettant la séparation d'impuretés d'un flux de gaz brut, le dispositif de séparation (102) comprenant les éléments suivants :
- plusieurs modules de séparation (100) selon l'une des revendications 1 à 10 ;
- plusieurs logements de module pour le logement des modules de séparation (100) ;
- une amenée de gaz brut pour l'amenée d'un flux de gaz brut à nettoyer vers les modules de séparation (100) disposés dans les logements de module ;
- une évacuation de gaz pur pour l'évacuation d'un flux de gaz pur pouvant être obtenu au moyen des modules de séparation (100).

12. Procédé de fabrication d'un module de séparation (100) selon l'une des revendications 1 à 10, comprenant les étapes suivantes :
fourniture de pièces moulées d'éléments de séparation à cyclone (112) ;
montage et fixation de celles-ci dans un boîtier (104).

13. Procédé selon la revendication 12, **caractérisé en ce que** les pièces moulées sont des pièces moulées en fibres, lesquelles sont fabriquées en particulier par moulage par voie humide, pressage puis séchage.
